# EUROPEAN PATENT SPECIFICATION

(11) **EP 2 677 833 B1**
(45) Date of publication and mention of the grant of the patent: **18.11.2015**
(21) Application number: 13169662.7
(22) Date of filing: 29.05.2013
(51) Int. Cl.: H04W 76/02, H04W 84/18

(54) **Terminal and Method for P2P Connection in Wi-Fi Network**
Endgerät und Verfahren zur P2P-Verbindung in Wi-Fi-Netzwerken
Terminal et procédé de connexion P2P dans un réseau wi-fi

(30) Priority: 19.06.2012 KR 20120065582
(43) Date of publication of application: 25.12.2013
(73) Proprietor: Samsung Electronics Co., Ltd, Gyeonggi-do 443-742 (KR)
(72) Inventor: Jung, Buseop, 443-742 Gyeonggi-do (KR)
(74) Representative: Gover, Richard Paul

(56) References cited:
- EP-A1- 2 389 042
- EP-A2- 2 076 091
- US-A1- 2005 107 102
- US-A1- 2009 323 659

## Description

### BACKGROUND OF THE INVENTION

### Field of the Invention

The present invention relates to a terminal and method for establishing P2P connection in a Wi-Fi network. More particularly, the present invention relates to a terminal and method for establishing a Wi-Fi P2P connection between a group owner terminal and a connection-requested terminal.

### Description of the Related Art

Wi-Fi Peer to Peer (Wi-Fi P2P or Wi-Fi Direct) is a technology that enables the devices equipped with Wi-Fi interface to connect directly to one another without involvement of Access Point (AP) of the Infrastructure network.

In legacy Wi-Fi, most Wi-Fi devices were designed for the purpose of accessing the Internet through an AP without consideration regarding direct communication amongst the Wi-Fi devices in a peer to peer mode.

In order to complement the lack of Wi-Fi, Bluetooth has been introduced but due to the short communication range and low data rate there are still many areas where communication is lacking. Although Bluetooth can be configured to operate in an ad-hoc mode for direct device-to-device communication, the ad-hoc mode communication is not used frequently due to the shortcomings such as the lack of security, high power consumption, and low data throughput limited to 11Mbps.

In view of some of the above problems, Wi-Fi P2P has been introduced as a new peer-to-peer communication technology with reinforced security and simplified connectivity in a Wi-Fi Simple Configuration (WSC). The Wi-Fi P2P also supports 802.11n standard so as to improve the data throughput and power management efficiency with an enhanced power conservation algorithm.

However, the Wi-Fi P2P has a drawback in user convenience in that a group owner terminal working as a relay controls the connection between the connection-requesting terminal and the connection-requested terminal.

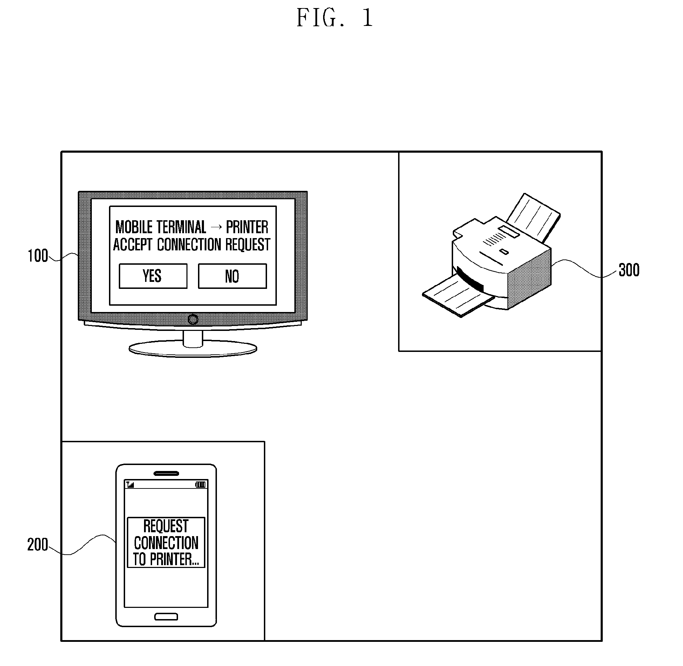

Referring now to FIG. 1, an exemplary home Wi-Fi P2P group includes a mobile phone 200 as the connection-requesting terminal located at a bed room, a TV 100 as the group owner terminal 100 located in a living room, and a printer 300 as the connection-requested terminal located in another bed room or area of the house. If the user manipulates the mobile phone 200 as the connection-requesting terminal to transmit a connection request for P2P data communication with the printer 300 as the connection-requested terminal, the TV 100 as the group owner terminal displays a notification message according to the Wi-Fi P2P communication protocol. The TV 100 as the group owner terminal also determines whether or not to accept the connection between the connection-requesting terminal 200 and the connection-requested terminal 300.

This procedure sometimes causes confusion regarding the subject and object of accepting and establishing connection for the P2P data communication. Also, since the decision as to whether to accept the connection request is determined by the group owner terminal 100 rather than the connection-requested terminal 300, the connection-requested terminal 300 is forced to become part of the connection establishment process regardless of the connection-requested terminal owner's intention.

As a consequence, in the convention Wi-Fi P2P connection process, the connection-requested terminal has to search for the group owner terminal for acceptance of the connecting-requesting terminal, even when the connection-requesting terminal 200 is located relatively close to the connection-requested terminal 300, and connect to the connection-requested terminal via the group owner terminal, resulting in a user's inconvenience and overall system utilization degradation.

US-2005/0107102-A1 describes an apparatus to relay connection requests between wireless devices in a wireless network including at least one piconet having a master device and one or more slave devices.

US-2009/0323659-A1 describes an apparatus and a method for establishing an ad-hoc mode connection in a cellular wireless communication system.

### SUMMARY OF THE INVENTION

The present invention has been made in an effort to address some of the shortcomings of known systems. It is an object of the present invention to provide a terminal and method for establishing a Wi-Fi P2P connection that facilitates P2P communication such that the group owner terminal relays the connection request issued by the connection-requesting terminal to the connection-requested terminal which controls the connection process, thereby relieving the connection-requested terminal of the burden of having to connect the group owner and wait for a response as to whether or not the request is accepted.

Another object of the present invention provides a terminal and method for establishing a Wi-Fi P2P connection that facilitates P2P communication by defining the message format including a device identifier of the connection-request terminal or connection relay request and response message formats based on the connection request and allowing for the connection-requesting terminal to receive, from the connection-requested terminal, the information on whether to accept the connection or PIN and to establish the connection with connection-requested terminal.

In accordance with a first aspect of the present invention, a method for establishing a connection between terminals is provided. The method comprises: transmitting, from a connection-requesting terminal to a group owner terminal, a connection request for Peer-To-Peer, P2P, communication with a connection-requested terminal including a device identifier of a connection-requested terminal; receiving, by the connection-requesting terminal, a connection response from the group owner terminal including information regarding whether the connection-requested terminal accepts the connection request for P2P communication; and performing, by the connection-requesting terminal with the group owner terminal, a provisioning process to connect the connection-requesting terminal to the group owner terminal using a credential checked for establishing the connection with the connection requested terminal based on the information regarding whether the connection request is accepted by the connection-requested terminal that is included in the connection response; wherein the connection request is relayed by the group owner terminal to the connection-requested terminal and the connection response is relayed from the group owner terminal to the connection-requesting terminal; wherein communication between the connection-requesting terminal, the group owner terminal and the connection requested terminal is made using WiFi; and wherein the connection response includes an information for performing the provisioning if the connection-requested terminal accepts the connection request.

In accordance with a second aspect of the present invention, a method for establishing a connection between terminals is provided. The method comprises: transmitting, from a group owner terminal, a connection relay request corresponding to a connection request transmitted by a connection-requesting terminal seeking Peer-To-Peer, P2P, communication with a connection-requested terminal; receiving, by the group owner terminal a connection relay response indicating whether the connection request is accepted by the connection-requested terminal; transmitting, from the group owner terminal, a connection response to the connection-requesting terminal when the connection request is accepted; and performing, by the group owner terminal with the connection-requesting terminal, a provisioning process to connect the group owner terminal to the connection-requesting terminal using a credential checked for establishing the connection with the connection requested terminal based on the information regarding whether the connection request is accepted that is included in the connection response; wherein communication between the connection-requesting terminal, the group owner terminal and the connection-requested terminal is made using WiFi; and wherein the connection response includes an information for performing the provisioning if the connection-requested terminal accepts the connection request.

In accordance with a third aspect of the present invention, a method for establishing a connection between terminals is provided. The method comprises: receiving, by connection-requested terminal, a connection relay request corresponding to a connection request for Peer-To-Peer, P2P, communication transmitted by a connection-requesting terminal that is relayed from a group owner terminal; determining, by the connection-requested terminal, whether to accept the connection request of the connection-requesting terminal; and transmitting, by the connection-requested terminal to the group owner terminal, a connection relay response generated on the basis of determination result by the connection-requested terminal; wherein communication between the connection-requesting terminal, the group owner terminal and the connection-requested terminal is made using WiFi; and wherein the connection relay response is for use in generating a connection response upon which is based a credential for use in a provisioning process performed between the connection-requesting terminal and the group owner terminal; and wherein the connection response includes an information for performing the provisioning if the connection-requested terminal accepts the connection request.

In accordance with a fourth aspect of the present invention, there is provided a terminal. The terminal comprises: a communication unit configured for data communication via WiFi; and a control unit configured to control the communication unit to: transmit a connection request for Peer-To-Peer, P2P, communication with a connection-requested terminal that is relayed via WiFi from a group owner terminal to the connection requested terminal, said connection request including a device identifier of the connection-requested terminal and receive a connection response from the group owner terminal indicating whether the connection request for P2P communication is accepted; wherein the control unit is further configured to: perform, with the group owner terminal, a provisioning process to connect the terminal to the group owner terminal using a credential checked for establishing the connection with the connection requested terminal based on information regarding whether the connection request is accepted that is included in the connection response; and wherein the connection response includes an information for performing the provisioning if the connection-requested terminal accepts the connection request.

In accordance with a fifth aspect of the present invention, there is provided a terminal. The terminal comprises: a communication unit configured for data communication via WiFi; and a control unit configured to control the communication unit to: receive a connection request for Peer-To-Peer, P2P, communication transmitted from a connection-requesting terminal; transmit, to the connection-requested terminal, a connection relay request corresponding to the connection request; receive a connection relay response indicating whether the connection request for P2P with the connection-requesting terminal is accepted by the connection-requested terminal, and transmit a connection response to the connection-requesting terminal; wherein the control unit is further configured to: perform, with the connection-requesting terminal, a provisioning process to connect the terminal to the connection-requesting terminal using a credential checked for establishing the connection with the connection requested terminal based on information regarding whether the connection request is accepted that is included in the connection response; and wherein the connection response includes an information for performing the provisioning if the connection-requested terminal accepts the connection request.

In accordance with a sixth aspect of the present invention, there is provided a terminal. The terminal comprises: a communication unit which performs data communication via WiFi; and a control unit configured to: control the communication unit to receive a connection relay request generated based on a connection request for Peer-To-Peer, P2P, communication transmitted by a connection-requesting terminal and relayed from a group owner terminal; determine whether to accept the connection request of the connection-requesting terminal; and control the communication unit to transmit a connection relay response message generated based on determination result to the group owner terminal wherein the connection relay response is for use in generating a connection response upon which is based a credential for use in a provisioning process performed between the connection-requesting terminal and the group owner terminal; and wherein the connection response includes an information for performing the provisioning if the connection-requested terminal accepts the connection request.

Also disclosed is a method for establishing a connection between terminals including transmitting, at a connection-requesting terminal, a connection request including a device identifier of a connection-requested terminal to a group owner terminal. The connection-requesting terminal receives a connection response from the group owner terminal including information on whether the connection-requested terminal accepts the connection request. A provisioning process is performed for establishing the connection with the group owner terminal based on the information regarding whether the connection request is accepted, the information being included in the connection response.

In certain embodiments, the device identifier is used for addressing the connection request to the connection-requested terminal which determines whether to accept the connection request.

In certain embodiments, the connection request is a provision discovery request.

Also disclosed is a method for establishing a connection between terminals including transmitting, by a group owner terminal, a connection relay request corresponding to a connection request transmitted by a connection-requesting terminal to a connection-requested terminal; receiving by the group owner terminal a connection relay response indicating whether the connection request is accepted by the connection-requested terminal; and transmitting by the group owner terminal a connection response to the connection-requesting terminal based on whether the connection request is accepted.

In certain embodiments, the connection request includes a device identifier of the connection-requested terminal.

In certain embodiments, the connection relay request includes at least one of a vendor name field, a service type field, and a data field.

In certain embodiments, the service type field is set to a value corresponding to a provision discovery relay request, and the data field contains a device identifier of the connection-requested terminal.

In certain embodiments, transmitting a connection relay request includes generating a service discovery request based on the connection request; transmitting the service discovery request to the connection-requested terminal.

Also disclosed is a method for establishing a connection between terminals including receiving a connection relay request from a group owner terminal corresponding to a connection request transmitted by a connection-requesting terminal; determining whether to accept the connection request of the connection-requesting terminal; and transmitting a connection relay response to the group owner terminal generated on the basis of determination result.

In certain embodiments, the determining step includes displaying a notification indicating whether the connection request is received from the connection-requesting terminal; receiving a user command for selecting whether or not to accept the connection request of the connection-requesting terminal; and determining on the basis of the user command whether the connection request is accepted.

In certain embodiments, the connection relay response includes at least one of a vendor name field, a service type field, and a data field.

In certain embodiments, the service type field is set to a value corresponding to a provision discovery relay response, and the data field comprises, when the connection request is accepted, at least one of a Push-Button Configuration (PBC) information or PIN code based on a Wi-Fi Simple Configuration (WSC) configuration method.

In certain embodiments, the WSC configuration method is determined by the connection-requesting terminal and received in the connection relay request.

In certain embodiments, transmitting the connection relay response includes generating a service discovery response indicating whether or not the connection request is accepted; and transmitting the service discovery response to the group owner terminal.

Also disclosed is a terminal preferably including a communication unit which is responsible for data communication with another terminal; and a control unit which controls the communication unit to transmit a connection request including a device identifier of a connection-requested terminal to a group owner terminal and receives a connection response indicating whether the connection request is accepted from the group owner terminal.

In certain embodiments, the device identifier is used for addressing the connection request to the connection-requested terminal which determines whether or not to accept the connection request.

In certain embodiments, the connection request is a provision discovery request.

Also disclosed is a terminal including a communication unit which provides data communication with another terminal; and a control unit which controls the communication unit to receive a connection request transmitted by a connection-requesting terminal, transmit to a connection-requested terminal a connection relay request corresponding to the connection request, receive a connection relay response indicating whether the connection request is accepted by the connection-requested terminal, and transmit a connection response to the connection-requesting terminal.

In certain embodiments, the connection request includes a device identifier of the connection-requested terminal.

In certain embodiments, the connection relay request includes at least one of a vendor name field, a service type field, and a data field.

In certain embodiments, the control unit controls the communication unit to generate a service discovery request based on the connection request and transmit the service discovery request to the connection-requested terminal.

Also disclosed is a terminal including a communication unit which performs data communication with another terminal; and a control unit being configured for controlling the communication unit to receive a connection relay request generated based on a connection request transmitted by a connection-requesting terminal from a group owner terminal, determines whether to accept the connection request of the connection-requesting terminal, and controls the communication unit to transmit a connection relay response message generated based on determination result to the group owner terminal.

In certain embodiments, the connection relay response includes at least one of a vendor name field, a service type field, and a data field.

In certain embodiments, the control unit generates a service discovery response indicating whether or not the connection request is accepted and controls the communication unit to transmit the service discovery response to the connection-requesting terminal.

### BRIEF DESCRIPTION OF THE DRAWINGS

FIG. 1 is a diagram illustrating a configuration of a conventional Wi-Fi P2P network system;
FIG. 2 is a diagram illustrating an exemplary Wi-Fi P2P network system to which the present invention is applied;
FIG. 3 is a signaling diagram illustrating a 1:1 connection establishment procedure in the Wi-Fi P2P network according to an exemplary embodiment of the present invention;
FIG. 4 is a diagram illustrating a table showing the detail of the Client Info Descriptor for use in the Wi-Fi P2P network according to an exemplary embodiment of the present invention;
FIG. 5 is a diagram illustrating a table showing details of the service protocol type available in the Wi-Fi P2P network according to an exemplary embodiment of the present invention;
FIG. 6 is a diagram illustrating a status code table of a service discovery response message for use in the Wi-Fi P2P network according to an exemplary embodiment of the present invention;
FIG. 7 is a diagram illustrating a message format of the service discovery query for use in the P2P connection establishment method according to an exemplary embodiment of the present invention;
FIG. 8 is a diagram illustrating a message format of the service discovery response message for use in the P2P connection establishment method according to an exemplary embodiment of the present invention;
FIG. 9 is a signaling diagram illustrating a connection establishment procedure in a Wi-Fi P2P network according to an exemplary embodiment of the present invention;
FIG. 10 is a diagram illustrating a table showing details of attributes of the P2P attribute message for use in the Wi-Fi P2P network according to an exemplary embodiment of the present invention.
FIG. 11 is a diagram illustrating a message format of a query data and response for use in the Wi-Fi P2P network according to an exemplary embodiment of the present invention.
FIG. 12 is a flowchart illustrating a connection-requesting terminal procedure of the connection establishment method in the Wi-Fi P2P network according to an exemplary embodiment of the present invention;
FIG. 13 is a block diagram illustrating a configuration of the connection-requesting terminal of the Wi-Fi P2P network according to an exemplary embodiment of the present invention;
FIG. 14 is a flowchart illustrating a group owner terminal procedure of the connection establishment method in the Wi-Fi P2P network according to an exemplary embodiment of the present invention;
FIG. 15 is a block diagram illustrating a configuration of the group owner terminal operating in the Wi-Fi P2P network according to an exemplary embodiment of the present invention;
FIG. 16 is a flowchart illustrating a connection-requested terminal procedure of the connection establishment method in the Wi-Fi P2P network according to an exemplary embodiment of the present invention; and
FIG. 17 is a block diagram illustrating a configuration of the connection-requested terminal operating in the Wi-Fi P2P network according to an exemplary embodiment of the present invention.

### DETAILED DESCRIPTION

The present invention can be applied, for example, to a connection request from one terminal to another that are operating in a Wi-Fi P2P network and connection control and management about the connected terminals.

Also, the present invention can be applied, for example, to the typical electronic devices as the terminals operating in a Wi-Fi P2P network included but in no way limited to a smartphone, portable terminal, mobile terminal, Personal Digital Assistant (PDA), Portable Multimedia Player (PMP), laptop computer, and Wibro terminal, and other P2P-enabled terminals and services supporting data communication.

In the following description, the term "connection-requesting terminal" denotes the terminal requesting a P2P connection, and the "connection-requested terminal" denotes the terminal receiving the request from the connection requesting terminal for the P2P connection via a relay from the group owner terminal, and these items may be referred as another term according to the exemplary embodiment. The connection-requesting terminal may not constitute a client terminal of the P2P group until it belongs to the P2P group through connection establishment with the connection-requested terminal. The connection-requesting terminal checks the connection-requested terminal through the group owner terminal to establish a connection with the connection-requested terminal and, as a consequence, becomes a member of the P2P group to operate as a client.

In the following description, the term "group owner terminal" denotes the terminal working as a relay such as an access point (AP) within the P2P group and may be referred to as another term according to a particular exemplary embodiment of the invention. The group owner terminal manages the connection between client terminals belonged to the P2P group, establishes a connection with a certain connection-requested terminal from among the client terminals, and manages the connection request of the connection-requesting terminal to be a member of the P2P group.

The term "connection-requested terminal" is a target of the connection request issued by the connection-requesting terminal from among the client terminal belonged to the P2P group and may be referred with different terminology according to a particular exemplary embodiment.

The terms used in the following description, e.g. connection request/response and connection relay request/response messages, are for the purpose of describing particular exemplary embodiments of the present invention only and can be replaced by other terms or omitted.

The terminology used herein is provided for the purpose of describing particular exemplary embodiments for illustrative purposes only and is not intended to be limiting of the invention as define by the appended claims. Unless otherwise defined, all terms used herein have the same meaning as commonly understood by one of ordinary skill in the art to which this invention pertains, and should not be interpreted as having an excessively comprehensive meaning nor as having an excessively contracted meaning. If technical terms used herein is erroneous that fails to accurately express the technical idea of the present invention, such term(s) should be replaced with technical terms that allow the person in the art to properly understand. The general terms used herein should not be interpreted according to the definitions in the dictionary or in the context and should not be interpreted as an excessively contracted meaning.

As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, steps, operations, elements, components, and/or groups thereof.

Exemplary embodiments of the present invention are described herein with reference to the accompanying drawings in detail.

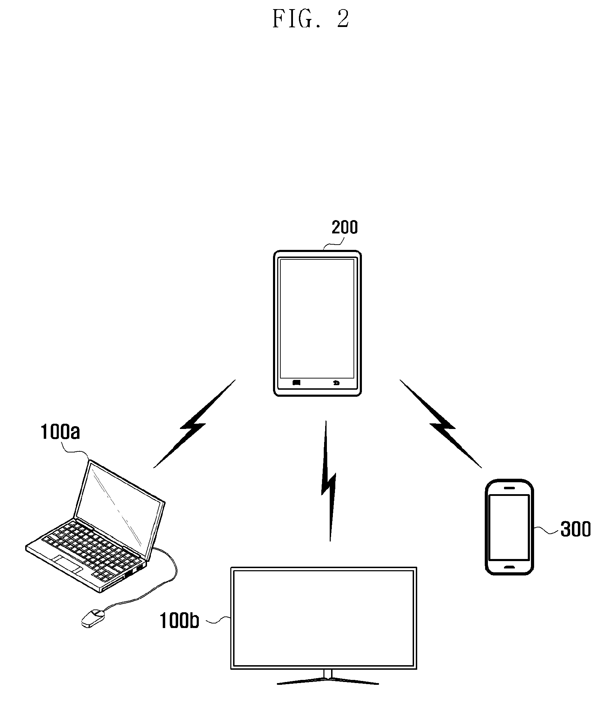

FIG. 2 is a diagram illustrating an exemplary Wi-Fi P2P network system to which the present invention is applied.

Referring now to FIG. 2, the Wi-Fi P2P network system includes a plurality of terminals 100a, 100b, 200, and 300.

The terminals 100a, 100b, 200, and 300 establish connections for data communication to form a P2P group using Wi-Fi P2P protocol.

In detail, one of the terminals 100a, 100b, 200, and 300 may operate as the group owner terminal 200 which establishes a connection with a client terminal 300 to form a P2P group. One of the other terminals in the P2P group could have been the group owner terminal.

In case that the connection-requesting terminals 100a and 100b are connected to the client terminal 300 belonged to the P2P group through the group owner terminal 200, the connection-requesting terminals 100a and 100b become client terminals of the P2P group such that the P2P group is updated with the addition of the connection-requesting terminals 100a and 100b.

The group owner terminal 200 may operate as an Access Point (AP) for forming a Wireless Local Area Network (WLAN). The group owner terminal 200 can be determined/selected through Group Owner Negotiation using P2P protocol in peer-to-peer connection process for forming the P2P group.

The group owner terminal 200 can control the connection establishment from among the client terminals 100a, 100b, and 300 in 1:1 or 1:N relationship.

Detailed descriptions according to the present invention on the connection-requesting terminals 100a and 100b, the group owner terminal 200, and the connection-requested terminal 300 forming the Wi-Fi P2P network system are made hereinafter.

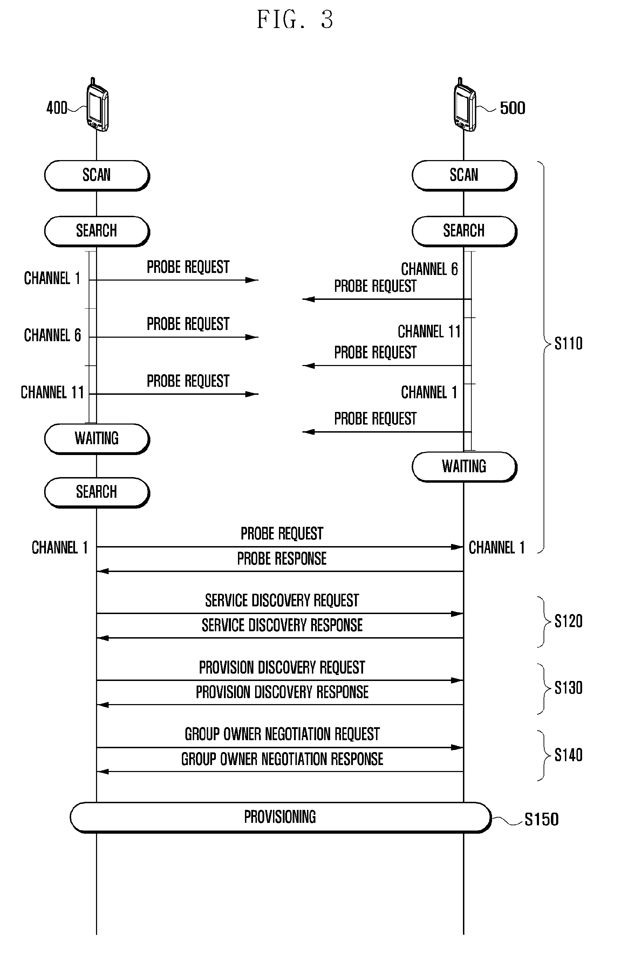

FIG. 3 is a signaling diagram illustrating a 1:1 connection establishment procedure in the Wi-Fi P2P network according to an exemplary embodiment of the present invention.

Referring to FIG. 3,, the 1:1 connection establishment procedure in the Wi-Fi P2P network progresses in the following manner.

First, the first terminal 400 and the second terminal 500 perform P2P device discovery respectively at step S110.

Each of the first and second terminals 400 and 500 respectively enters the P2P device discovery mode to perform the P2P device discovery. For example, each of the first and second terminals 400 and 500 executes a Wi-Fi P2P application in response to either a user input or automatically, and when a predetermined condition is fulfilled or enters the P2P device discovery mode in response to a Wi-Fi Simple Configuration (WSC) request.

Each of the first and second terminals 400 and 500 performs a search for other terminals and listens to the reply from other terminals repeatedly to discover P2P terminals.

In the search process, each of the first and second terminals 400 and 500 scans channels. The channel scan is performed across the entire channels available for communication (e.g. channel 1 to channel 11) and a fast channel search can be performed to the Social channels (channel 1, 6, and 11) repeatedly. The scan can be performed, for example, according to the scanning scheme for the IEEE 802.11 standard protocol.

Each of the first and second terminals 400 and 500 while in an idle state can select one of the entire channels or the social channels to stay in the idle state.

The first and second terminals 400 and 500 can exchange the Probe Request and Probe Response messages to perform the P2P terminal search. For example, the first terminal 400 transmits the Probe Request to the second terminal 500, and the second terminal 500 transmits the Probe Request to the first terminal 400 in response to the Probe Request.

The Probe Request may include at least one of P2P Information Element (IE), WSC IE, and Supp Reg IE. The Probe Request may include at least one of P2P IE, WSC IE, Supp Reg IE, and Robust Security Network (RSN) IE.

With continued reference to FIG. 3, the first and second terminals 400 and 500 can switch between search and standby repeatedly to discover each other on a common channel. At this time, the first and second terminals 400 and 500 can check the counterpart's rule through the Probe Request or Probe Response or restrict the counterpart's response.

In the case where a P2P group has been established already prior to the P2P terminal search of the first and second terminals 400 and 500, one of the first and second terminals 400 and 500 may be the group owner terminal. For example, in case that the second terminal 500, as the group owner terminal, has formed a P2P group, the first terminal 400 can discover the second terminal 500 acting as the group owner terminal through the P2P terminal search.

At this time, the second terminal 500 can receive the Probe Request transmitted by the first terminal 400 in the idle state without performing search process.

The second terminal 500 can also search the connection-requested terminal to which the first terminal 400 attempts connection by referencing the Client Info Descriptor of the client terminal in the P2P group to which the second terminal 500 is connected. The second terminal 500 also can send to the first terminal 400 the Probe Response including information on whether the connection-requested terminal is present.

The second terminal 500 also can send to the first terminal 400 the Probe Response including the Client Info Descriptor. Upon receipt of the Client Info Descriptor, the first terminal 400 can then determine whether the connection-requested terminal exists in the P2P group by referencing the Client Info Descriptor.

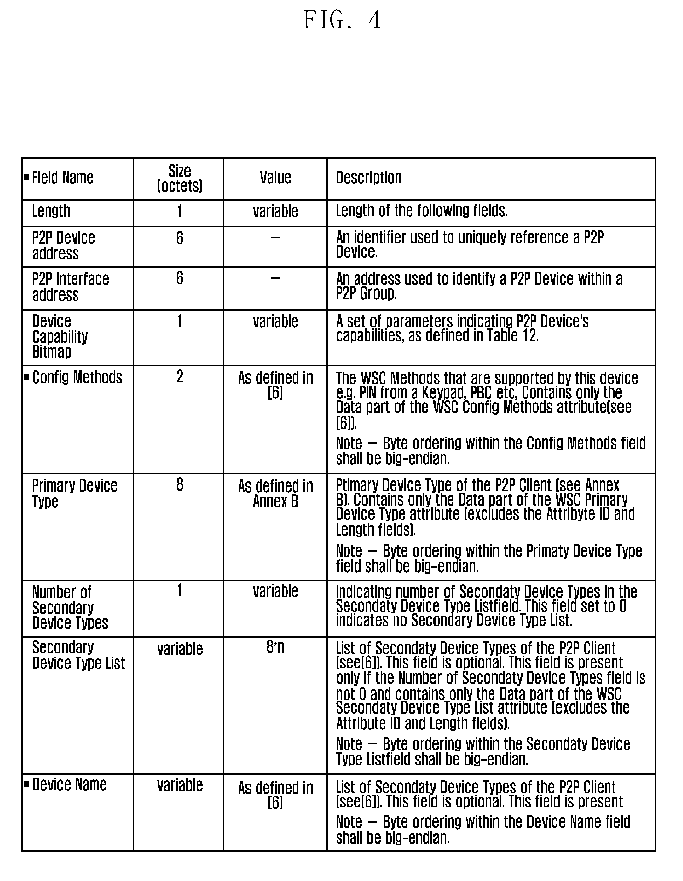

FIG. 4 is a diagram illustrating a table showing the detail of the Client Info Descriptor for use in the Wi-Fi P2P network according to an exemplary embodiment of the present invention.

Referring now to FIG. 4, the Client Info Descriptor stored in the group owner terminal includes a P2P terminal address, a Device Capability Bitmap, a Device Name, etc. The Client Info Descriptor also may include the WSC configuration method of the terminal. The WSC configuration method can be any of PBC, PIN from Display, and PIN form Keypad. The first terminal 400 can be determined by the WSC configuration method for provisioning based on the WSC configuration method field included in the Client Info Descriptor.

In the P2P terminal search process, if a predetermined timeout timer expires without discovery of another Wi-Fi P2P terminal, the first and second terminals 400 and 500 terminate the P2P terminal search or performs scanning again to restart P2P terminal search.

With continued reference to FIG. 3, at step S120 the first and second terminals 400 and 500 perform Service Discovery.

In order to check the service supported by both the first and second terminals 400 and 500, the first and second terminals 400 and 500 may perform the service search by exchanging information on the services provided by the higher layers.

The service search can be performed by exchanging Service Discovery Query and Service Discovery Response. For example, the first client terminal 400 sends to the second terminal 500 the Service Discovery Query and the second client terminal 500 sends to the first client terminal 400 the Service Discovery Response in response to the Service Discovery Query.

The Service Discovery Query and Service Discovery Response can be formatted according to the Generic Advertisement Service (GAS) defined in the IEEE 802.11 u. In detail, the Service Discovery Query can be formed as a GAS Initial Request Action Frame, and the Service Discovery Response as GAS Initial Response Action Frame.

The first terminal 400 designates the Service Protocol Type using the Service Discovery Query and transmits the Service information suitable for the service protocol type.

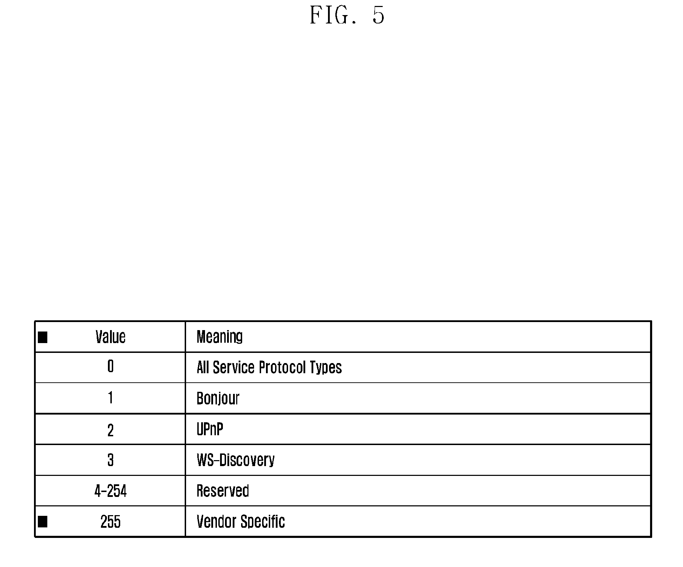

FIG. 5 is a diagram illustrating a table showing details of the service protocol type available in the Wi-Fi P2P network according to an exemplary embodiment of the present invention.

Referring now to FIG. 5, the service protocol type can be one of uPnP, Bonjuor, WS-Discovery, and a web service-related protocol. The service protocol type can be extended, if necessary, by using the reserved bits and expressed in various fashions using the Vendor Specific field.

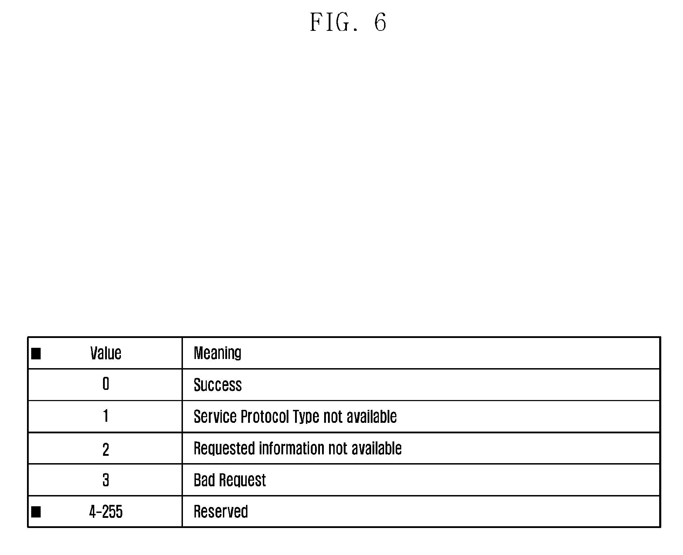

The second terminal 500 can, for example, inform of the service protocol type and response data in the Service Discovery Response. The second terminal 500 also can transmit the service discovery status code in the Service Discovery Response, and the service discovery status code may have the value corresponding to the Service Discovery response result (success, not available, bad request) as shown in FIG. 6.

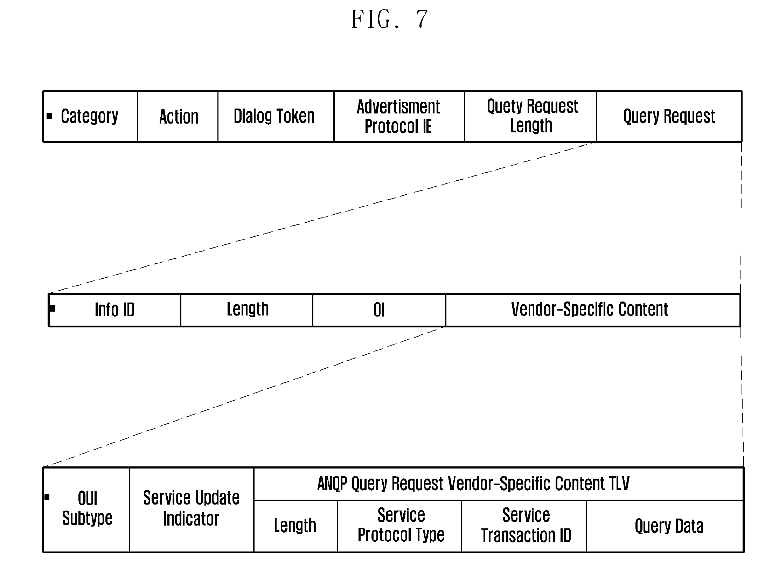

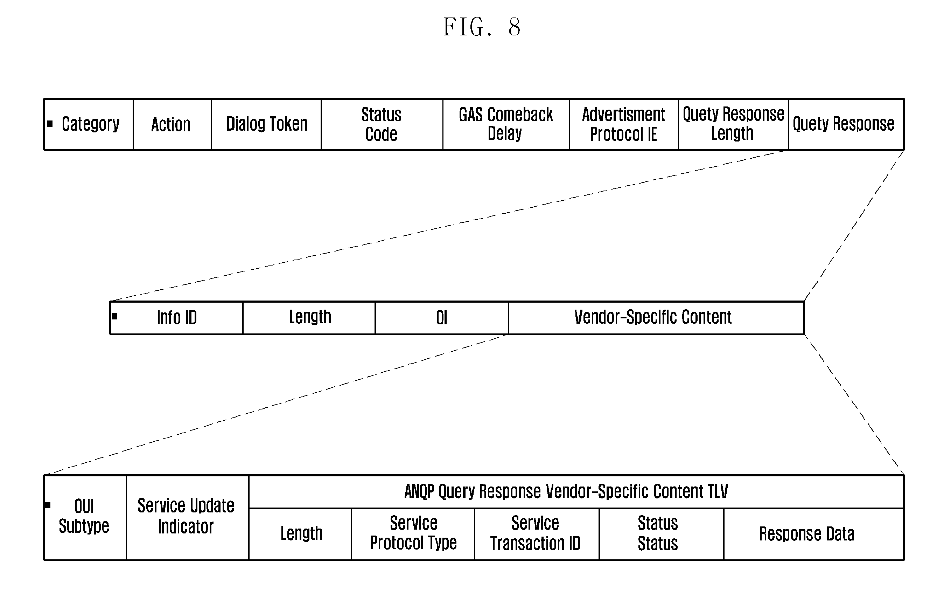

The message formats of the service discovery query and service discover response are described in detail with reference to FIGs. 7 and 8.

According to an exemplary embodiment of the present invention, in case that the P2P group has been established in the network prior to the provision discovery message exchange between the first and second terminals 400 and 500, the group owner terminal can transmit a connection relay request in the service discovery request. In other words, the group owner terminal can transmit a connection relay request corresponding to the connection request transmitted by the connection-requesting terminal. Upon receipt of the connection relay request, the connection-requested terminal determines whether or not to accept the connection and transmits a connection relay response in the service discover response to the group owner terminal.

The service discovery query and service discovery response includes at least one of a vendor name, a service type, and data. The vendor name, service type, and the data may be a carrier in the vendor specific field of the service discovery query and service discovery response.

The service discovery can be performed to check the services supported by the terminals connected through the network on layer 3 when the first and second terminals 400 and 500 are connected to each other on the layer above MAC layer (layer 2). However, the service discovery can also be performed flexibly at a certain state according to a certain higher layer command regardless of the MAC protocol.

For example, the service discovery can be performed to check the service protocols and service types supported by the counterpart terminal, in advance, in the P2P terminal discovery process. This check makes it possible for the first and second terminals 400 and 500 to perform terminal discovery again due to the mismatch of the service protocol types after the connection establishment therebetween.

Next, with reference to FIG. 3 again, the first and second terminals 400 and 500 perform a Provision Discovery Exchange at step S130. The first and second terminals 400 and 500 can perform the Provision Discovery Exchange through Provision Discovery Request and Provision Discovery Response. For example, the first terminal 400 transmits the Provision Discovery Request to the second terminal 500, and the second terminal 500 transmits the Provision Discovery Response to the first terminal 400 in response to the Provision Discovery Request.

The Provision Discovery Request may include the WSC configuration method. The WSC configuration method can be, for example, one of the PBC, PIN from Display, and PIN from Keypad. The WSC configuration can be determined by the first terminal 400. At this time, if the second terminal 500, as the group owner terminal, has formed a P2P group, then the first terminal 400 can determine the WSC configuration method based on the information about the WSC configuration method of the connection-requested terminal in the Client Info Descriptor received from the second terminal 500.

The Provision Discovery Request may include, for example, a P2P IE which contains P2P Attribute according to the P2P standard.

According to an exemplary embodiment of the present invention, the P2P attribute may include the P2P device identifier. The P2P device identifier can be used as the device ID of the connection-requested terminal 300.

Upon receipt of the Provision Discovery Request, the second terminal 500 displays an alarm notifying of a receipt of the Provision Discovery Request. In case that the Provision Discovery Request includes the WSC configuration method, the second terminal 500 can display the information on the WSC configuration method. For example, the second terminal 500 can notify of the WSC configuration method in such a way of displaying PIN or PIN input window according to the WSC configuration method.

The second terminal 500 notifies the user equipment (UE) of the information on the name of the first terminal 400 which has transmitted the Provision Discovery Request and the WSC configuration method in the form of a popup window such that the user can determine whether to accept the connection or whether to configure WSC.

Next, the first and second terminals 400 and 500 perform Group Owner Negotiation response and request at step S140.

In case that the P2P group is not formed yet, i.e. if neither the first terminal 400 nor the second terminal 500 is not the group owner terminal, the first and second terminals 400 and 500 can determine the group owner terminal through the group owner negotiation.

The first and second terminals 400 and 500 can exchange the group owner negotiation request and group owner negotiation response/confirmation to determine the group owner terminal.

The first and second terminals 400 and 500 can also compare the designated group owner intents with each other to determine the group owner terminal. The first and second terminals 400 and 500 also can determine the group owner terminal based on the information such as P2P group attribute, Operating Channel, and Listen Timing.

In case that the P2P group has already been formed, one of the first and second terminals 400 and 500 is likely to be the group owner terminal and thus the group owner negotiation may be omitted.

Finally, the first and second terminals 400 and 500 perform Provisioning at step S150.

For example, the group owner terminal, which is one of the first and second terminals 400 and 500, operates as a WSC register, and the other terminal operates as a WSC enrollee to perform Provisioning process exchanging credentials.

The first and second terminals 400 and 500 can form the P2P group by performing the provisioning process. In other words, the group owner terminal, among the first and second terminals 400 and 500, registers the other terminal as the client terminal and controls the P2P group connection of the new client terminal on the actual operation terminal. The client terminal, which is not the group owner terminal, connects to the group owner terminal using the credential checked through the provisioning process for data communication through the Wi-Fi P2P connection.

At this time, the first terminal 400 which has sent the provision discovery request can transmit the probe request periodically to check whether the session of the second terminal 500 responsible for WSC is in enabled state.

According to one aspect of the present invention, if it is determined to accept the connection of the first terminal 400, the second terminal 500 switches its session to the enabled state to transmit a periodic probe response to the first terminal 400.

In case that the connection is rejected by the periodic probe response or it is impossible to switch the WSC session to the enabled state due to the periodic probe response reception failure in a predetermined time duration, the first terminal 400 then determines the connection failure and releases the connection.

Once the P2P group is established through the provisioning process, the group owner terminal operates on the actual operation channel and the client terminal establishes the Wi-Fi P2P network by connecting to the group owner terminal using the credential identified through the provisioning process.

FIG. 7 is a diagram illustrating a message format of the service discovery query for use in the P2P connection establishment method according to an exemplary embodiment of the present invention.

Referring now to FIG. 7, the service discovery request may include a GAS Initial Request Action Frame. In detail, the service discovery request can include a category field, an action field, a dialog token field, an advertisement protocol IE field, a query request length field, and a query request field.

The category field can be set to a value indicating a public action frame. The action field can be set to a value indicating the GAS Initial Request Action Frame. The dialog token field can be set to a value selected by the terminal which is not the group owner terminal transmitting the GAS Initial Request Action Frame and include the information necessary for identifying the GAS Initial Request Action Frame and the GAS Initial Response Action Frame. The advertisement protocol IE field can contain the information on a specific advertisement protocol and the information necessary for identifying the control of the advertisement corresponding to the advertisement protocol. The query request length field can be set to a value indicating a total length of the information contained in the query request field following the query request length field. The query request field is a GAS query which can be formatted according to the protocol defined in the advertisement protocol IE.

Referring now to FIG. 7, the query request field includes and info ID field, an optional information (OI) field, and a vendor specific field.

The info ID field can be set to a value corresponding to the capability list. The length field indicates the length of a field following the length field. The optional information field can be set to a value corresponding to the capability list indicating capabilities supported by the corresponding terminal.

As shown in FIG. 7, the vendor specific field preferably includes the query data field provided for various purposes according to the service provided by the vendor. Accordingly, the query data field can be set to a certain value by the vendor.

According to an exemplary embodiment of the present invention, the group owner terminal can transmit a connection relay request corresponding to the connection request transmitted by the connection-requesting terminal to the connection-requested terminal. In this case, the vendor specific field of the service discovery query can be written based on the connection request transmitted by the connection-requesting terminal.

FIG. 8 is a diagram illustrating a message format of the service discovery response message for use in the P2P connection establishment method according to an exemplary embodiment of the present invention.

Referring now to FIG. 8, the service discovery response includes a GAS Initial Response Action Frame. In detail, the service discovery response includes a category field, an action field, a dialog token field, a status code field, a GAS comeback delay field, an advertisement protocol IE field, a query response length field, and a query response field.

The category field is set to a value indicating a public action frame. The action field is set to a value indicating the GAS Initial Response Action Frame. The status code field can be set to a value indicating the service discovery result. The GAS comeback delay field indicates the time delay taken for the service discovery response corresponding to the service discovery request. The dialog token field is set to a value selected by the terminal transmitting the GAS Initial Response Action Frame. The advertisement protocol IE field contains information on as specific advertisement protocol and the information for identifying the control of the advertisement corresponding to the advertisement protocol. The query response length field indicates the length of the information contained in the query response field. The query response field is the GAS response and can be formatted according to the protocol indicated by the advertisement protocol IE.

Referring now to FIG. 8, the query response field includes an info ID field, a length field, an option information (OI) field, and a vendor specific field.

The info ID field can be set to a value corresponding to the capability list. The length field indicates the length of the field following it. The optional information field can be set to a value corresponding to the capability list indicating capabilities supported by the corresponding terminal.

As shown in FIG. 8, the vendor specific field includes the query data field provided for various purposes according to the service provided by the vendor. Accordingly, the query data field can be set to a certain value by the vendor.

According to an exemplary embodiment of the present invention, the connection-requested terminal can send the group owner terminal the connection relay response in the service discovery response in reply to the connection relay request. In other words, the service discovery response can be generated based on whether to accept the connection. In this case, the vendor specific field of the service discovery response can be set based on whether the connection-requested terminal accepts the connection.

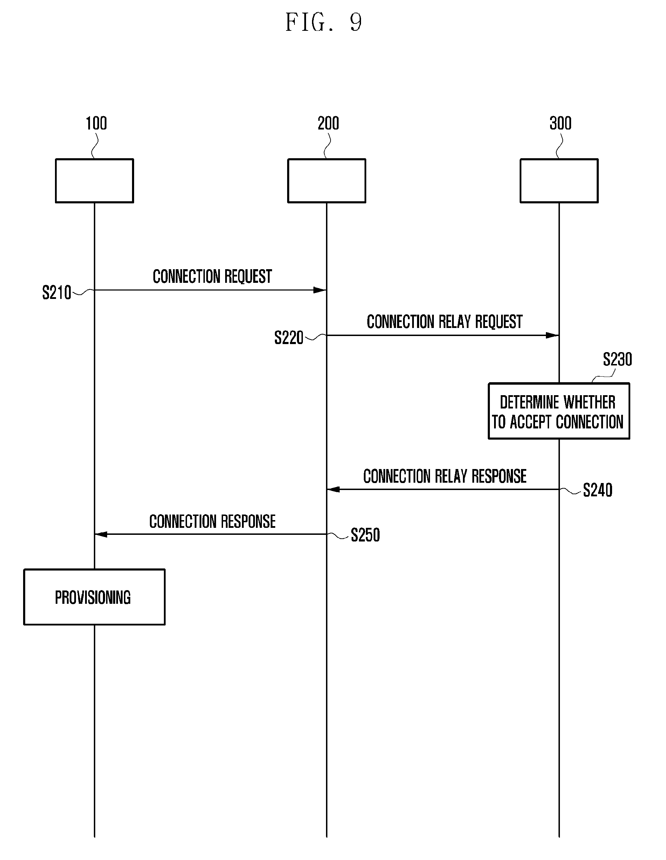

FIG. 9 is a signaling diagram illustrating a connection establishment procedure in a Wi-Fi P2P network according to an embodiment of the present invention.

Referring now to FIG. 9, the connection establishment procedure in the Wi-Fi P2P network is performed as follows.

The connection-requesting terminal 100 first transmits a connection request to the group owner terminal 200 at step S210.

The connection-requesting terminal 100 may send the group owner terminal 200 a device identifier of the connection-requested terminal 300 in the connection request.

The device identifier can be used for transmitting the connection request to the connection-requested terminal identified by the device identifier. The connection-requested terminal identified by the device identifier receives the connection request and determines whether to accept the connection requested by the connection-requesting terminal 100.

According to an exemplary embodiment of the present invention, the connection request may be the provision discovery request. In detail, the connection-requesting terminal 100 can send the group owner terminal 200 the provision discovery request having the P2P attribute containing the device identifier of the connection-requested terminal 300.

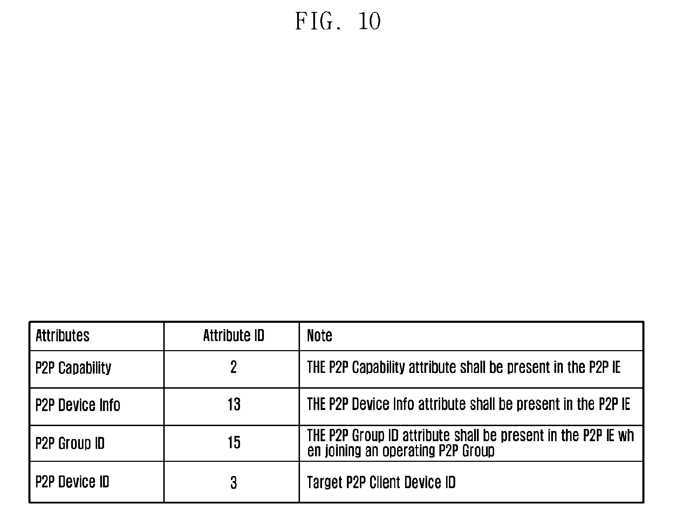

Referring now to FIG. 10, the provision discovery request may include the P2P attribute according to the P2P standard, and the P2P attribute can be configured to have the P2P capability, P2P device info, and P2P group ID.

According to an exemplary embodiment of the present invention, the P2P attribute may further include a P2P Device ID. In other words, the P2P attribute may further include the P2P device identifier corresponding to the P2P attribute identifier 3. The P2P device identifier can be the device identifier of the connection-requested terminal 300.

If the connection request including the device identifier of the connection-requested terminal 300 is received, the group owner terminal 200 determines whether the connection-requested terminal 300 identified by the device identifier exists in the P2P group. That is, the group owner terminal 200 can determine whether the connection-requested terminal 300 identified by the device identifier is included in the Client Info Descriptor.

The group owner terminal 200 can also transmit the Client Info Descriptor to the connection-requesting terminal 100 such that the connection-requesting terminal 100 determines whether the connection-requesting terminal 100 exists in the P2P group.

The connection-requesting terminal 100 can notify the group owner terminal 200 of the WSC configuration method using the connection request. The WSC configuration method can be one of PBC, PIN from Display, PIN from Keypad. The connection-requesting terminal 100 determines one of the WSC configuration methods. At this time, the connection-requesting terminal 100 acquires the WSC configuration method of the connection-requested terminal 300 based on the Client Info Descriptor received from the group owner terminal 200 and determines the WSC configuration method of the connection-requested terminal 300 in match with the WSC configuration method of the connection-requesting terminal 100.

If the device identifier of the connection-requested terminal 300 is received in the provision discovery request, the group owner terminal 200 transmits the provision discovery response to the connection-requesting terminal 100, the provision discovery response including the device identifier of the connection-requested terminal 300.

In addition, the group owner terminal 200 can determine whether to accept the connection requested by the connection-requesting terminal 100. For example, in case that the number of client terminals within the P2P group including the group owner terminal 200 is greater than the group capability of the group owner terminal 200, the group owner terminal 200 may reject the connection requested by the connection-requesting terminal 100. At this time, the group owner terminal 200 can notify the user of the receipt of the connection request from the connection-requesting terminal and determine on the basis of the user selection whether or not to accept the connection.

Next, the group owner terminal 200 transmits the connection relay request to the connection-requested terminal 300 at step S220.

The group owner terminal 200 can transmit to the connection-requested terminal 300 the connection relay request corresponding to the connection request.

The connection relay request can be generated in a certain message format based on the connection request transmitted by the connection-requesting terminal 100.

According to an exemplary embodiment of the present invention, the connection relay request is generated to have at least one of vendor name field, service type field, and data field.

The vendor name field indicates the terminal provider. For example, the vendor name field can be set to a value indicating the terminal provider (or manufacturer) so as to identify the protocol available between the terminals of the same provider. The vendor name field also can be set to a value indicating the terminal's Operating System (OS) (e.g. Bada, Android, etc.) in order to identify the protocol available among the terminals with the same OS.

The service type field can be used to discriminate from among the services provided by the vendor. According to an exemplary embodiment of the present invention, the service type field can be set to a value indicating the connection relay request to notify that the queried service is the service for relaying the connection request transmitted by the connection-requesting terminal.

The data field may include the device identifier of the connection-requested terminal 300 which has been received from the connection-requesting terminal 100. The data field also may include the WSC configuration method of the connection requesting terminal 100.

According to an exemplary embodiment of the present invention, the connection relay request can be a service discovery query. The service discovery query may include the vendor specific field that can be used freely by the vendor, and the vendor specific field may include a vendor name field, a service type, and a data field. Accordingly, the group owner terminal 200 can generate the service discovery request based on the connection request transmitted by the connection-requesting terminal 100 and transmit the generated service discovery request to the connection-requested terminal 300.

As shown at S220, the group owner terminal 200 can notify the connection-requested terminal 300 of the receipt of the connection request from the connection-requesting terminal 100 by means of the connection relay request.

Next, the connection-requested terminal 300 determines whether or not to accept the connection requested by the connection-requesting terminal 100.

According to an exemplary embodiment of the present invention, the connection-requested terminal 300 can display a notification notifying of the receipt of the connection request from the connection-requesting terminal 100. The connection-requested terminal 300 can notify of the receipt of the connection request in the form of a notification window or popup window and/or vibration and sound effect. At this time, the connection-requested terminal 300 can display the information on the connection-requesting terminal 100 along with the notification.

The connection-requested terminal 300 receives a command input for determining whether or not to accept the connection.

The connection-requested terminal 300 can be configured to receive the user command indicating whether to accept the connection requested by the connection-requesting terminal 100. At this time, the connection-requested terminal 300 can receive the user selection command based on a WSC configuration method. The WSC configuration method can be any of PBC, PIN from Display, and PIN from Keypad. The WSC configuration method can be the one determined by the connection-requesting terminal 100. The WSC configuration method also can be the one determined among the WSC configuration methods supported by the connection-requested terminal 300.

For example, if the WSC configuration method is PBC, the connection-requested terminal 300 presents a yes/no popup window asking for determining whether to accept the connection. For another example, if the WSC configuration is based on a PIN, the connection-requested terminal 300 displays the PIN or a window for receiving a PIN code necessary for accepting the connection.

The connection-requested terminal 300 can determine whether or not to accept the connection based on the user selection input.

Next, the connection-requested terminal 300 transmits the connection relay response to the group owner terminal 200 at step S240.

The connection-requested terminal 300 can transmit the connection relay response including the information indicating whether to accept the connection.

According to an exemplary embodiment of the present invention, the connection relay response may include at least one of a vendor name field, a service type field, and a data field.

The detailed descriptions on the vendor name field and the service type field have been made already in association with the connection relay request.

The data field may include the status code indicating whether to accept the connection request and PBC information or PIN code. The status code can be set to a value accepting or rejecting the connection request. The PBC information or PIN code is for the WSC provision such that the PIN code or PBC NULL value can be included according to the WSC configuration method.

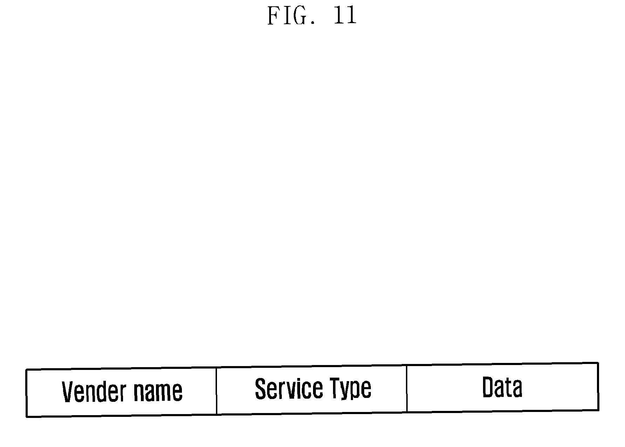

According to an exemplary embodiment of the present invention, the connection relay response can be a service discovery response. The service discovery response may include the vendor specific field which is defined freely by the vendor, and the vendor specific field can include the aforementioned vendor name, service type, and data fields as shown in FIG 11. Accordingly, the connection-requested terminal 300 generates the service discovery response based on whether the connection request is accepted and transmits the generated service discovery response to the group owner terminal 200.

The group owner terminal 200 can check on the basis of the connection relay response as to whether or not the connection request is accepted by the connection-requested terminal 300.

Finally, the group owner terminal 200 transmits a connection response to the connection-requesting terminal 100 at step S250.

The group owner terminal 200 can transmit the connection response to the connection-requesting terminal 100 based on whether the connection to the connection-requested terminal 300 has been accepted. In case that the connection-requested terminal 300 has accepted the connection request, the connection response may include the data indicating the connection acceptance and PBC information or PIN code for WSC provisioning. The connection response also can include the information on whether the session of the WSC manager is switched to the enabled state. If the connection-requested terminal 300 has rejected the connection request, the connection response can include the data indicating the connection failure.

According to an exemplary embodiment of the present invention, the connection response can be the periodic probe response corresponding to the periodic probe request transmitted by the connection-requesting terminal 100.

In case that the connection relay response indicates that the connection has been rejected, the group owner terminal 200 may not transmit the connection response to the connection-requesting terminal 100. If the connection response is not received in a predetermined time, the connection-requesting terminal 100 determines that the connection request has been rejected. It is also within the scope of the present invention that the group owner terminal can transmit a request denied message to the connection-requesting terminal that may or may not be a relayed message from the connection-requested terminal.

In the case where the connection request has been accepted, the connection-requesting terminal 100 may perform provisioning with the PIN code received in the connection response.

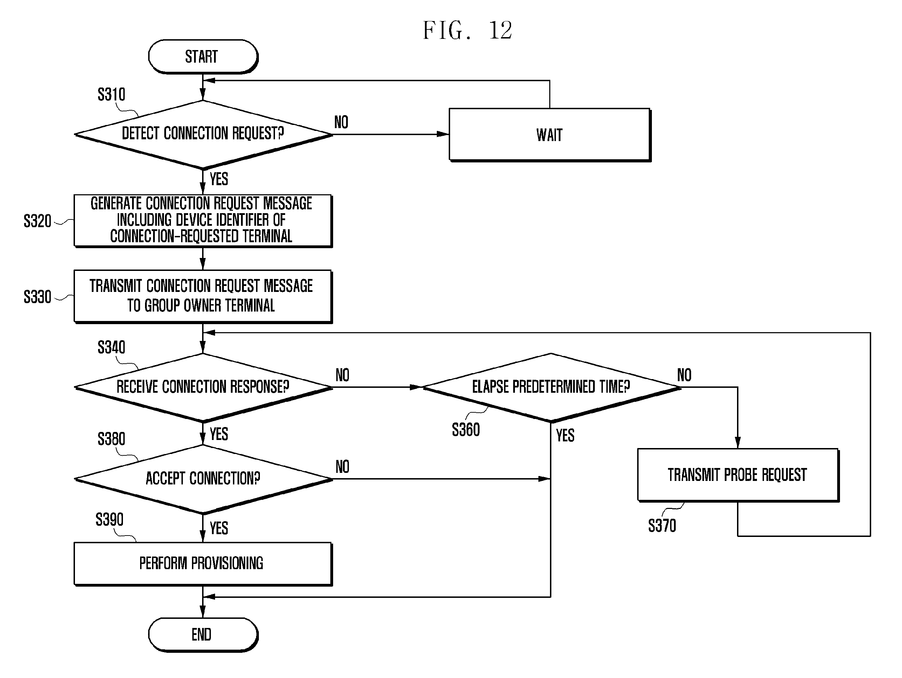

FIG. 12 is a flowchart illustrating a connection-requesting terminal procedure of the connection establishment method in the Wi-Fi P2P network according to an exemplary embodiment of the present invention.

Referring now to FIG. 12, the connection-requesting terminal procedure of the Wi-Fi P2P connection establishment method is performed as follows.

At S310, the connection-requesting terminal 100 determines whether or not a connection request is triggered.

The connection-requesting terminal 100 detects the execution of a Wi-Fi P2P application or the connection request generated according to a Wi-Fi Simple Configuration (WSC).

Next, at S320 the connection-requesting terminal 100 generates a connection request message including device identifier of the connection-requested terminal.

The device identifier can be used for transmitting the connection request message to the connection-requested terminal 300 identified by the device identifier. Upon receipt of the connection request, the connection-requested terminal 300 determines whether to accept the connection request.

The connection-requesting terminal 100 can generate a provision discovery request message including a P2P group identifier and the device identifier.

Next, at S330 the connection-requesting terminal 100 transmits the connection request message to the group owner terminal.

The connection-requesting terminal 100 can transmit to the group owner terminal 200 the connection request message that includes the device identifier of the connection-requested terminal 300.

According to an exemplary embodiment of the present invention, the connection request message can be the provision discovery request message.

The connection-requesting terminal 100 can determine whether the connection-requested terminal 300 exists in the P2P group based on the information provided by the group owner terminal 200 and by referencing the Client Info Descriptor.

Next, at S340 the connection-requesting terminal 100 determines whether a connection response message is received from the group owner terminal 200.

The received connection response message can be the periodic probe response transmitted in correspondence to the periodic probe request.

If no connection response is received, at S360 the connection-requesting terminal 100 determines whether or not a predetermined timeout timer has expired and, if the timeout timer has not expired, at S370 transmits a probe request to the group owner terminal 200 to check the connection status periodically.

If at S360 the timeout timer has expired, the connection-requesting terminal 100 determines that the connection request has been rejected or the communication link with the group owner terminal 200 has been broken and thus terminates the connection procedure.

If at S340 the connection response is received, then at S350 the connection-requesting terminal 100 determines whether or not the connection request has been accepted.

The connection-requesting terminal 100 can determine, based on the received connection response, whether or not the connection request to the connection-requested terminal 300 has been accepted. If the connection response message includes the data indicating the connection acceptance and PBC information or PIN code for WSC provisioning or the information indicating that the session of WSC manager is switched to the enabled state, the connection-requesting terminal determines that the connection has been accepted. Otherwise, if the connection response message includes the data indicating that the connection request has been rejected, the connection-requesting terminal 100 determines that the connection request has been rejected.

If it is determined that the connection request has been accepted at step S380, the connection-requesting terminal 100 performs provisioning at step S390.

The connection-requesting terminal 100 can perform the provisioning process for establishing a P2P communication link with the group owner terminal 200 using the PIN code received in the connection response message.

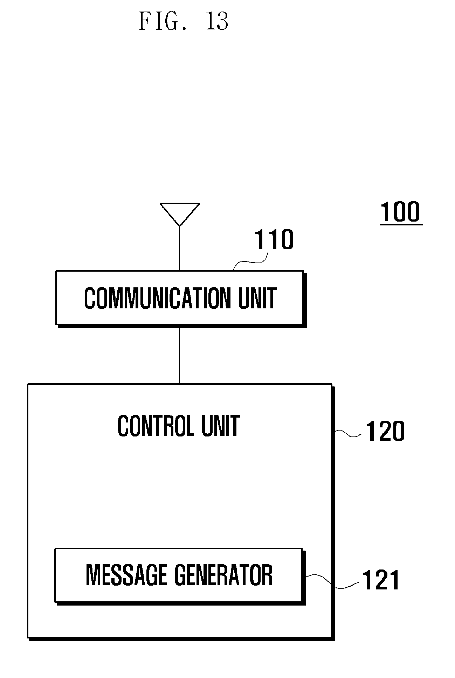

FIG. 13 is a block diagram illustrating a configuration of the connection-requesting terminal of the Wi-Fi P2P network according to an exemplary embodiment of the present invention.

Referring now to FIG. 13, the connection-requesting terminal 100 includes a communication unit 110 and a control unit 120.

The communication unit 110 can perform data communication with another terminal. The communication unit 110 may include a transmitter for up-converting and amplifying the signal to be transmitted and a receiver for low noise amplifying and down-converting the received signal. and an antenna.

According to an exemplary embodiment of the present invention, the communication unit 110 can transmit a connection request to another terminal (e.g. group owner terminal) and receive a connection response. The communication unit 110 can transmit the connection request including the device identifier of the connection-requested terminal 300 and receiving the connection response including the information indicating whether or not the connection-requested terminal accepts the connection request.

According to an exemplary embodiment of the present invention, the communication unit 110 can transmit/receive the provision discovery request and response and the periodic probe request and response.

The control unit 120, which is comprised of a process or microprocessor and is configured for controlling the overall operations of the components of the connection-requesting terminal 100. The control unit 102 also includes a message generator 121.

The message generator 120 can generate the control request message. According to an exemplary embodiment of the present invention, the message generator 120 can generate the connection request message including the device identifier of the connection-requested terminal 300.

The message generator 120 can also generate the provision discovery request message and the periodic probe request message. The message generator 120 can generate a provision discovery request message including the device identifier of the connection-requested terminal 300.

According to an exemplary embodiment of the present invention, the control unit 120 is configured to control the communication unit 110 to transmit the connection request message generated by the message generator 121 to the group owner terminal 200. The control unit 120 can also control the communication unit 110 to transmit the provision discovery request in the connection request message.

The control unit 120 can control the communication unit 110 to receive the connection response message including information indicating whether or not the requested connection is accepted.

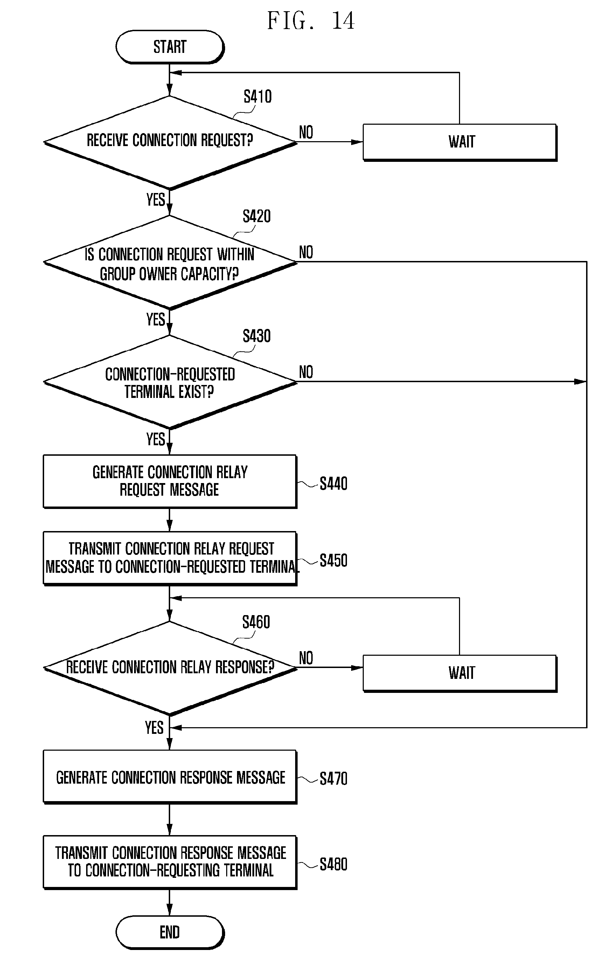

FIG. 14 is a flowchart illustrating exemplary operation of a group owner terminal procedure of the connection establishment method in the Wi-Fi P2P network according to an embodiment of the present invention.

Referring now to FIG. 14, the group owner terminal procedure of the Wi-Fi P2P connection establishment method is performed as follows.

At S410, the group owner terminal 200 determines whether a connection request message is received.

The group owner terminal 200 can receive the connection request message including the device identifier of the connection-requested terminal 300 from the connection-requesting terminal 100. At this time, the connection request message can be the provision discovery request message. In detail, the group owner terminal 200 can receive the provision discovery request message including the device identifier of the connection-requested terminal 300 as P2P attribute.

If no connection request message is received, the group owner terminal 200 stays in the idle state.

If at S410 the connection request message is received, at S420 the group owner terminal 200 may determine whether to accept the connection request of the connection-requesting terminal 200.

For example, if at S420 the number of client terminals in the P2P group including the connection-requesting terminal 100 exceeds the group capacity of the group owner terminal 200, the group owner terminal 200 can reject the connection request from the connection-requesting terminal 100.

If the connection request is accepted, at S430 the group owner terminal 200 determines whether the connection-requested terminal 300 identified with the device identifier exists in the P2P group. In other words, the group owner terminal 200 determines whether the connection-requested terminal 300 corresponding to the device identifier exists in the Client Info Descriptor.

The group owner terminal 200 may transmit the Client Info Descriptor to the connection-requesting terminal 100 such that the connection-requesting terminal 100 determines whether the connection-requested terminal 300 exists in the P2P group.

Upon receipt of the device identifier of the connection-requested terminal 300 in the provision discovery request message, the group owner terminal 200 transmits the provision discovery response message to the connection-requesting terminal 100. At this time, the provision discovery response may include the device identifier of the connection-requested terminal 300.

Next, a S440 the group owner terminal 200 generates the connection relay request message.

The connection relay request message can be generated based on the connection request message in a certain format.

According to an exemplary embodiment of the present invention, the connection relay request message can include a vendor name field, a service type field, and a data field. The data field can include the device identifier of the connection-requested terminal 300 which has been received from the connection-requesting terminal 100.

According to an exemplary embodiment of the present invention, the connection relay request message can be the service discovery query message. The group owner terminal 200 is capable of the service discovery request message based on the connection request message transmitted by the connection-requesting terminal 100.

Next, at S450 the group owner terminal 200 transmits the connection relay request message to the connection-requested terminal 300.

The group owner terminal 200 can transmit to the connection-requested terminal 300 the connection relay request message corresponding to the connection request message. The group owner terminal 200 can transmit to the connection-requested terminal 300 the service discovery request in the connection relay request message.

Next, at step S460 the group owner terminal 200 determines whether a connection relay response message is received from the connection-requested terminal 300.

The group owner terminal 200 receives the connection relay response including the determination, by the connection-requested terminal 300, on whether to accept the connection request.

If the connection relay response is not received, the group owner terminal 200 stays in the idle state.

If the connection relay response is received from the connection-requested terminal 300, at S470 the group owner terminal 200 generates the connection response message.

The group owner terminal 200 determines on the basis of the connection relay response whether the connection-requested terminal 300 is accepted. The group owner terminal 200 generates the connection response message including the information on whether the connection request is accepted.

If the connection is accepted by the connection-requested terminal 300, the connection response message may include the data indicating the acceptance of the connection and PBC information or PIN code for WSC provisioning. Also, the connection response message is capable of including the information indicating that the session of the WSC manager is switched to the enabled state. If the connection request is rejected, the connection response message is capable of including the data indicating the rejection of the connection request.

Next, at S480 the group owner terminal 200 transmits the connection response message to the connection-requesting terminal 100.

The group owner terminal 200 transmits to the connection-requesting terminal 100, the connection response message generated based on the connection accept/reject information included in the connection relay response message.

According to an exemplary embodiment of the present invention, the connection response message can be the periodic probe response message in response to the periodic probe request message transmitted by the connection-requesting terminal 100.

If it is determined that the connection request has been rejected according to the connection relay response, the group owner terminal 200 may not transmit the connection response message to the connection-requesting terminal. Thus, while one aspect there can be a transmission of the connection response message upon a rejection, in another aspect of the invention, if the connection response message is not received in a predetermined time, the connection-requesting terminal 100 determines that the connection request has been rejected and thus terminates the procedure.

If it is determined that the connection request has been accepted, the group owner terminal 200 performs the provisioning process with the connection-requesting terminal. At this time, the group owner terminal 200 performs the provisioning for establishing a P2P connection with the connection-requesting terminal 100 based on the PIN code acquired from the connection-requested terminal 200.

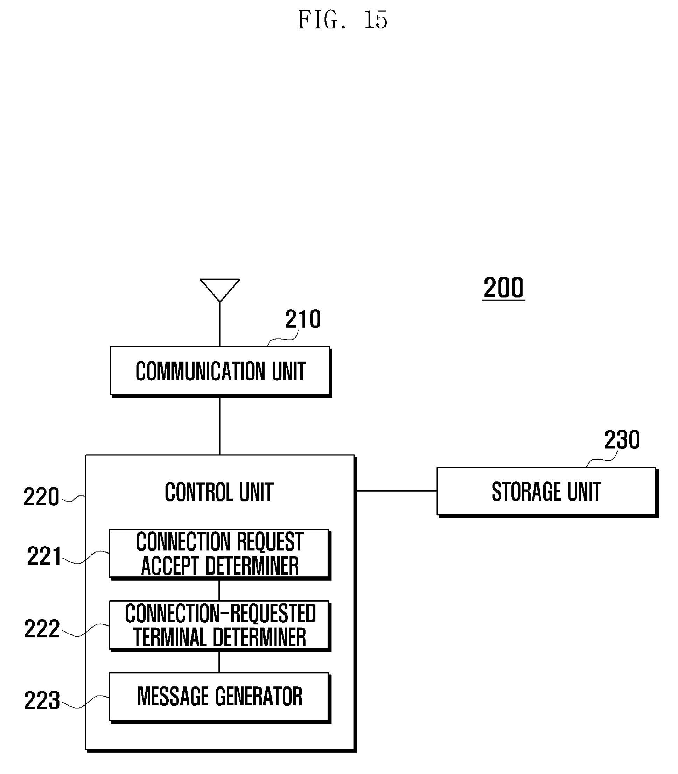

FIG. 15 is a block diagram illustrating a configuration of the group owner terminal operating in the Wi-Fi P2P network according to an embodiment of the present invention.

Referring now to FIG. 15, the group owner terminal 200 preferably includes a communication unit 210, a control unit 220, and a storage unit 230.

The communication unit 210 is responsible for data communication with another terminal. The communication unit 210 is includes a transmitter for up-converting and amplifying the signal to be transmitted and a receiver for low noise amplifying and down-converting the received signal. The communication may include a codec.

According to an exemplary embodiment of the present invention, the communication unit 210 can transmits the connection request to and receiving the connection response from another terminal (e.g. connection-requesting terminal or connection-requested terminal). The communication unit 210 can transmit the connection relay request to and receive the connection relay response from another terminal.

The communication unit 210 can exchange the service discovery request and response messages and the provision discovery request and response messages with another terminal.

The control unit 220 preferably is configured to control overall operations of the components of the group owner terminal 200. The control unit 220 includes a connection request accept determiner 221, a connection-requested terminal determiner 222, and a message generator 223.

The connection request accept determiner 221 can determine whether to accept the connection request transmitted by the connection-requesting terminal 100. The connection request accept determiner 221 can determine whether the number of client terminals in the P2P group including the connection-requesting terminal 100 exceeds the group capacity of the group owner terminal 200. The connection request accept determiner 221 can reject the connection request from the connection-requesting terminal 100 when the number of client terminals exceeds the group capacity.

The connection-requested terminal determiner 222 can determine whether the connection-requested terminal 200 to which the connection-requesting terminal 100 attempts connection already exists in the P2P group. The connection-requested terminal determiner 222 can search the Client Info Descriptor stored in the storage unit 230 for the identifier of the connection-requested terminal 300 and determining whether the connection-requested terminal 300 already exists in the P2P group based on the search result.

The message generator 223 can generate the connection relay request message. The message generator 223 can generate the connection relay request message including at least one of a vendor name field, a service type field, and a data field. The message generator 223 can generate the connection relay request message including the device identifier of the connection-requested terminal 300 in the data field. The message generator 223 can generate the service discovery request message as the connection relay request message.

The message generator 223 can generate the connection response message. The message generator 223 can generate the connection response message including the information indicating whether the connection to the connection-requested terminal 300 has been accepted. The message generator 223 can generate the periodic probe response message as the connection response message.

The control unit 220 is preferably configured to control the communication unit 210 to receive the connection request message and determines whether to accept the connection by means of the connection request accept determiner 221. In case that the connection is accepted, the control unit 220 determines, by means of the connection-requested terminal determiner 222, whether the connection-requested terminal 300 exists in the P2P group and generates, by means of the message generator 223, the connection relay request message to the connection-requested terminal 300.

The control unit 220 can also control the communication unit 210 to receive the connection relay response message and transmit the connection response message generated by the message generator 223.

The storage unit 230, which is a non-transitory machine readable medium, can storing the programs, information, and data related to the operation of the group owner terminal 200. For example, the storage unit 230 is capable of storing the Client Info Descriptor listing the client terminals within in the P2P group.

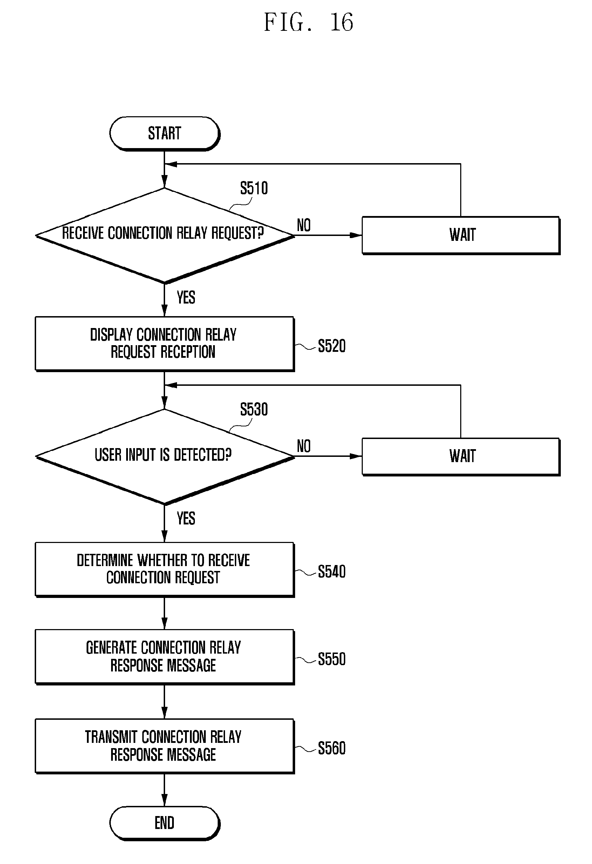

FIG. 16 is a flowchart illustrating a connection-requested terminal procedure of the connection establishment method in the Wi-Fi P2P network according to an exemplary embodiment of the present invention.

Referring now to FIG. 16, the connection-requested terminal procedure of the Wi-Fi P2P connection establishment method is performed as follows.

At S510 the connection-requested terminal 300 determines whether a connection relay request message is received from the group owner terminal 200.

The connection relay request message can be generated based on the connection request message transmitted by the connection-requesting terminal 100 in a certain message format.

According to an exemplary embodiment of the present invention, the connection relay request message includes at least one of a vendor name field, a service type field, and a data field. The data field includes the device identifier of the connection-requested terminal 300 which has been received from the connection-requesting terminal 100.

According to an exemplary embodiment of the present invention, the connection relay request message can be the service discovery query message.

If the connection relay request message is not received, the connection-requested terminal 300 stays in the idle state.

If the connection relay request message is received, the connection-requested terminal 300 determines whether to accept the connection request from the connection-requesting terminal 100.

In more detail, at S520 the connection-requested terminal 300 displays a notification message informing of the receipt of the connection request from the connection-requesting terminal.

The connection-requested terminal 300 can display the notification message in the form of any of a notification window, a popup message, vibration, sound effect, etc. At this time, the connection-requested terminal 300 can display the information on the connection-requesting terminal 100 along with the notification message.

Next, at S530 the connection-requested terminal 300 determines whether a user input is detected.

The connection-requested terminal 300 can receive a user input for determining whether to accept the connection request from the connection-requesting terminal 100. The connection-requested terminal 300 is capable of receiving the user input through one of WSC configuration methods. The WSC configuration methods include PBC, PIN from Display, and PIN from Keypad. For example, if the WSC configuration method is a PIN-based method, the connection-requested terminal 300 displays the PIN or a PIN input window for receiving a PIN code required for accepting the connection request.

The connection-requested terminal 300 can determine whether or not to accept the connection request by itself without receiving any user input.

At S540, the connection-requested terminal 300 determines to accept the connection request based on the user input.

Next, at S550 the connection-requested terminal 300 generates the connection relay response message.

The connection-requested terminal can generate the connection relay response message including the information on whether the group owner terminal 200 is accepted, based on the determination result.

According to an exemplary embodiment of the present invention, the connection relay response message can include a vendor name field, a service type field, and a data field. The data field is capable of including a status code indicating whether the connection-requested terminal 300 has accepted the connection request and PBC information or PIN code. The status code can be set to a value corresponding to the connection request accept or reject. The PBC information or PIN code is for WSC provisioning and is capable of including a PIN code or PBC NULL value.

According to an exemplary embodiment of the present invention, the connection-requested terminal 300 can transmit the service discovery response message as the connection relay response message.

Next, at S560 the connection-requested terminal 300 transmits the connection relay response message to the group owner terminal

According to an exemplary embodiment of the present invention, the connection-requested terminal 300 can transmit the service discovery response message as the connection relay response message to the group owner terminal 200.

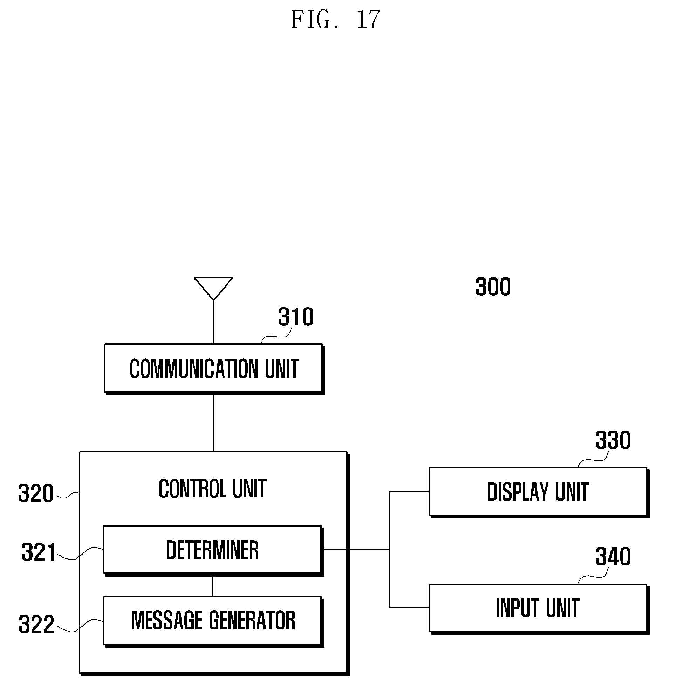

FIG. 17 is a block diagram illustrating a configuration of the connection-requested terminal operating in the Wi-Fi P2P network according to an exemplary embodiment of the present invention.

As shown in FIG. 17, the connection-requested terminal 300 preferably includes a communication unit 310, a control unit 320, a display unit 330, and an input unit 340.

The communication unit 310 is responsible for data communication with another terminal. The communication unit 310 is capable of including a transmitter for up-converting and amplifying the signal to be transmitted and a receiver for low noise amplifying and down-converting the received signal.

According to an exemplary embodiment of the present invention, the communication unit 310 can exchange the connection relay request and response messages with another terminal (e.g. group owner terminal). The communication unit 310 can also transmit/receive the service discovery request and response messages as the connection relay request and response messages.

The control unit 320 is configured for controlling the overall operations of the components of the connection-requested terminal 300. The control unit 320 is configured for controlling a determiner 321 and a message generator 322.

The determiner 321 can determine whether to accept the connection request from the connection-requesting terminal 100. In detail, the determiner 321 can control the display unit 330 to display a notification of the receipt of the connection relay request message and controls the input unit 340 to receive a connection accept/reject command to determine whether to accept the connection request based on the connection accept/reject command.

The message generator 322 can generate the connection relay response message. The message generator 322 can generate the connection relay response message including the connection accept/reject indicator. The message generator 322 can generate the service discovery response message as the connection relay response message.

The display unit 330 can display the connection relay reception status of the connection-requesting terminal 100. For example, the display unit 330 can display the notification of receipt of the connection relay request message in the form of a popup window or a notification window along with the information on the connection-requesting terminal 100, WSC configuration method selection information, PBC window according to the WSC configuration method, and PIN code or PIN code input window.

The input unit 340 can receive the user's manipulation signal. The input unit 340 can be implemented with at least one of a key pad dome switch, touch pad (capacitive/resistive), jog wheel, and jog switch. The input unit 340 can be implemented in a layered structure with the display unit 330 as a touch display using a touch sensor or approach sensor.

According to an exemplary embodiment of the present invention, the input unit 340 can receive the user input for commanding whether to receive the connection request from the connection-requesting terminal 100. The input unit 304 also can receive the PBC information or PIN code input by the user.

As described above, the terminal and method for establishing a Wi-Fi P2P connection according to the present invention can facilitate a Wi-Fi P2P service through a unified UX Flow by granting the connection control to the connection-requested terminal without compromising the Wi-Fi P2P standard.

Also, the terminal and method for establishing a Wi-Fi P2P connection according to the present invention can improve the utilization of the network service by allowing the user to take into account only the interface to the connection-requested terminal regardless of the location of the group owner terminal.

Furthermore, the terminal and method for establishing a Wi-Fi P2P connection according to the present invention is advantageous in providing backward compatibility with the terminals operating in legacy Wi-Fi P2P standard in application and implementation and facilitating application and implementation due to the adaptive utilization of the features defined in the Wi-Fi P2P standard.

The above-described methods according to the present invention can be implemented in hardware, firmware or as software or computer code loaded into hardware such as a processor or microprocessor and executed, the machine executable code being stored on a recording medium such as a CD ROM, an RAM, a floppy disk, a hard disk, or a magneto-optical disk or computer code downloaded over a network originally stored on a remote recording medium or a non-transitory machine readable medium and to be stored on a local recording non-transitory medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, thumbnail, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove with specific terminology, this is for the purpose of describing particular embodiments only and not intended to be limiting of the invention. While particular exemplary embodiments of the present invention have been illustrated and described, a person of ordinary skill in the art that various other changes and modifications can be made without departing from the scope of the attached claims.

## Claims

1. A method for establishing a connection between terminals (100, 300), comprising:
transmitting (S330), from a connection-requesting terminal (100) to a group owner terminal (200), a connection request for Peer-To-Peer, P2P, communication with a connection-requested terminal (300) including a device identifier of a connection-requested terminal (300);
receiving (S340), by the connection-requesting terminal (100), a connection response from the group owner terminal (200) including information regarding whether the connection-requested terminal (300) accepts the connection request for P2P communication; and
performing (S390), by the connection-requesting terminal (100) with the group owner terminal (200), a provisioning process to connect the connection-requesting terminal (100) to the group owner terminal (200) using a credential checked for establishing the connection with the connection requested terminal (300) based on the information regarding whether the connection request is accepted by the connection-requested terminal (300) that is included in the connection response;
wherein the connection request is relayed by the group owner terminal (200) to the connection-requested terminal (300) and the connection response is relayed from the group owner terminal (200) to the connection-requesting terminal (100);
wherein communication between the connection-requesting terminal (100), the group owner terminal (200) and the connection requested terminal (300) is made using WiFi; and
wherein the connection response includes an information for performing the provisioning if the connection-requested terminal (300) accepts the connection request.

2. The method of claim 1, wherein the device identifier is used for addressing the connection request to the connection-requested terminal (300); and
wherein the connection-requested terminal (300) determines whether or not to accept the connection request.

3. A method for establishing a connection between terminals (100, 300), comprising:
transmitting (S450), from a group owner terminal (200), a connection relay request corresponding to a connection request transmitted by a connection-requesting terminal (100) seeking Peer-To-Peer, P2P, communication with a connection-requested terminal (300);
receiving (S460), by the group owner terminal (200), a connection relay response indicating whether the connection request is accepted by the connection-requested terminal (300);
transmitting (S480), from the group owner terminal (200), a connection response to the connection-requesting terminal (100) when the connection request is accepted by the connection-requested terminal (300); and
performing, by the group owner terminal (200) with the connection-requesting terminal (100), a provisioning process to connect the group owner terminal (200) to the connection-requesting terminal (100) using a credential checked for establishing the connection with the connection requested terminal (300) based on the information regarding whether the connection request is accepted by the connection-requested terminal (300), that is included in the connection response;
wherein communication between the connection-requesting terminal (100), the group owner terminal (200) and the connection-requested terminal (300) is made using WiFi; and
wherein the connection response includes an information for performing the provisioning if the connection-requested terminal (300) accepts the connection request.

4. The method of claim 3, wherein the connection request comprises a device identifier of the connection-requested terminal (300).

5. The method of claim 3, wherein the connection relay request comprises at least one of a vendor name field, a service type field, and a data field.

6. A method for establishing a connection between terminals (100, 300), comprising:
receiving (S510), by connection-requested terminal (300), a connection relay request corresponding to a connection request for Peer-To-Peer, P2P, communication transmitted by a connection-requesting terminal (100) that is relayed from a group owner terminal (200);
determining (S540), by the connection-requested terminal (300), whether to accept the connection request of the connection-requesting terminal (100); and
transmitting (S560), by the connection-requested terminal (300) to the group owner terminal (200), a connection relay response generated on the basis of determination result by the connection-requested terminal (300);
wherein communication between the connection-requesting terminal (100), the group owner terminal (200) and the connection-requested terminal (300) is made using WiFi; and
wherein the connection relay response is for use in generating (S480) a connection response upon which is based a credential for use in a provisioning process performed (S390) between the connection-requesting terminal (100) and the group owner terminal (200); and
wherein the connection response includes an information for performing the provisioning if the connection-requested terminal (300) accepts the connection request.

7. The method of claim 6, wherein determining (S540) by the connection-requested terminal (300) whether to accept the connection request for P2P communication comprises:
displaying (S520) a notification indicating whether the connection request for P2P communication is received from the connection-requesting terminal (100);
receiving (S530) a user selection command that indicates whether the connection request of the connection-requesting terminal (100) is accepted; and
determining (S540) on the basis of the user selection command whether the connection request is accepted.

8. The method of claim 6, wherein the connection relay response comprises at least one of a vendor name field, a service type field, and a data field.

9. The method of claim 8, wherein the service type field is set to a value corresponding to a provision discovery relay response; and
wherein the data field comprises, when the connection request is accepted, at least one of a Push-Button Configuration (PBC) information or PIN code based on a Wi-Fi Simple Configuration (WSC) configuration method.

10. A terminal (100) comprising:
a communication unit (110) configured for data communication via WiFi; and
a control unit (120) configured to control the communication unit (110) to:
transmit (S330) a connection request for Peer-To-Peer, P2P, communication with a connection-requested terminal (300) that is relayed via WiFi from a group owner terminal (200) to the connection requested terminal (300), said connection request including a device identifier of the connection-requested terminal (300) and
receive (S340) a connection response from the group owner terminal (200) indicating whether the connection request for P2P communication is accepted by the connection-requested terminal (300);
wherein the control unit (120) is further configured to:
perform (S390), with the group owner terminal (200), a provisioning process to connect the terminal (100) to the group owner terminal (200) using a credential checked for establishing the connection with the connection requested terminal (300) based on information regarding whether the connection request is accepted by the connection-requested terminal (300), that is included in the connection response; and
wherein the connection response includes an information for performing the provisioning if the connection-requested terminal (300) accepts the connection request.

11. A terminal (200) comprising:
a communication unit (210) configured for data communication via WiFi; and
a control unit (220) configured to control the communication unit (210) to:
receive (S410) a connection request for Peer-To-Peer, P2P, communication transmitted from a connection-requesting terminal (100);
transmit (S450), to the connection-requested terminal, a connection relay request corresponding to the connection request;
receive (S460) a connection relay response indicating whether the connection request for P2P with the connection-requesting terminal (100) is accepted by the connection-requested terminal (300); and
transmit (S480) a connection response to the connection-requesting terminal (100);
wherein the control unit (220) is further configured to:
perform, with the connection-requesting terminal (100), a provisioning process to connect the terminal (200) to the connection-requesting terminal (100) using a credential checked for establishing the connection with the connection requested terminal (300) based on information regarding whether the connection request is by the connection-requested terminal (300), that is included in the connection response; and
wherein the connection response includes an information for performing the provisioning if the connection-requested terminal (300) accepts the connection request.

12. The terminal (200) of claim 11, wherein the connection request comprises a device identifier of the connection-requested terminal (300).

13. The terminal (200) of claim 11, wherein the connection relay request comprises at least one of a vendor name field, a service type field, and a data field.

14. A terminal (300) comprising:
a communication unit (310) which performs data communication via WiFi; and
a control unit (320) configured to:
control the communication unit (310) to receive (S510) a connection relay request generated based on a connection request for Peer-To-Peer, P2P, communication transmitted by a connection-requesting terminal (100) and relayed from a group owner terminal (200);
determine whether to accept the connection request of the connection-requesting terminal (100); and
control the communication unit (310) to transmit (S560) a connection relay response message generated based on determination result to the group owner terminal (200);
wherein the connection relay response is for use in generating a connection response upon which is based a credential for use in a provisioning process performed between the connection-requesting terminal (100) and the group owner terminal (200); and
wherein the connection response includes an information for performing the provisioning if the connection-requested terminal (300) accepts the connection request.

15. The terminal (300) of claim 14, wherein the connection relay response comprises at least one of a vendor name field, a service type field, and a data field.

## Patentansprüche

1. Verfahren zur Herstellung einer Verbindung zwischen Endgeräten (100, 300), umfassend:
Senden (S330), ab einem Verbindung anfordernden Endgerät (100) an ein Gruppeneigentümer-Endgerät (200), einer Verbindungsanforderung zur Kommunikation Peer-to-Peer bzw. P2P mit einem Endgerät (300), dessen Verbindung angefordert wurde, einschließlich einer Gerätekennung eines Endgeräts (300), dessen Verbindung angefordert wurde;
Empfangen (S340), durch das Verbindung anfordernde Endgerät (100), einer Verbindungsantwort ab dem Gruppeneigentümer-Endgerät (200) einschließlich Information bezüglich darauf, ob das Endgerät (300), dessen Verbindung angefordert wurde, die Verbindungsanforderung zur P2P-Kommunikation akzeptiert; und
Ausführen (S390), durch das Verbindung anfordernde Endgerät (100) mit dem Gruppeneigentümer-Endgerät (200), eines Bereitstellungsprozesses, um das Verbindung anfordernde Endgerät (100) mit dem Gruppeneigentümer-Endgerät (200) unter Verwendung eines Passworts zu verbinden, das zur Herstellung der Verbindung mit dem Endgerät (300), dessen Verbindung angefordert wurde, auf der Grundlage der Information, die bezüglich darauf geprüft wurde, ob die Verbindungsanforderung vom Endgerät (300), dessen Verbindung angefordert wurde, akzeptiert wird, die in der Verbindungsantwort inbegriffen ist; wobei die Verbindungsanforderung vom Gruppeneigentümer-Endgerät (200) an das Endgerät (300), dessen Verbindung angefordert wurde, weitergeleitet wird und die Verbindungsantwort vom Gruppeneigentümer-Endgerät (200) an das Verbindung anfordernde Endgerät (100) weitergeleitet wird;
wobei Kommunikation zwischen dem Verbindung anfordernden Endgerät (100), dem Gruppeneigentümer-Endgerät (200) und dem Endgerät (300), dessen Verbindung angefordert wurde, unter Verwendung von Wi-Fi hergestellt wird; und
wobei die Verbindungsantwort eine Information zur Ausführung der Bereitstellung einschließt, falls das Endgerät (300), dessen Verbindung angefordert wurde, die Verbindungsanforderung akzeptiert.

2. Verfahren nach Anspruch 1, wobei die Gerätekennung zur Adressierung der Verbindungsanforderung an das Endgerät (300), dessen Verbindung angefordert wurde, verwendet wird; und
wobei das Endgerät (300), dessen Verbindung angefordert wurde, ermittelt, ob oder nicht die Verbindungsanforderung akzeptiert wird.

3. Verfahren zur Herstellung einer Verbindung zwischen Endgeräten (100, 300), umfassend:
Senden (S450), ab einem Gruppeneigentümer-Endgerät (200), einer Anforderung des Verbindungsrelais, die einer Verbindungsanforderung entspricht, die von einem Verbindung anfordernden Endgerät (100) gesendet wurde, das Kommunikation Peer-to-Peer bzw. P2P mit einem Endgerät (300) sucht, dessen Verbindung angefordert wurde;
Empfangen (S460), durch das Gruppeneigentümer-Endgerät (200), einer Antwort des Verbindungsrelais, die anzeigt, ob die Verbindungsanforderung vom Endgerät (300) akzeptiert wird, dessen Verbindung angefordert wurde;
Senden (S480), ab dem Gruppeneigentümer-Endgerät (200), einer Verbindungsantwort an das Verbindung anfordernde Endgerät (100), wenn die Verbindungsanforderung vom Endgerät (300) akzeptiert wird, dessen Verbindung angefordert wurde; und
Ausführen, durch das Gruppeneigentümer-Endgerät (200) mit dem Verbindung anfordernden Endgerät (100), eines Bereitstellungsprozesses, um das Gruppeneigentümer-Endgerät (200) mit dem Verbindung anfordernden Endgerät (100) unter Verwendung eins Passworts zu verbinden, das zur Herstellung der Verbindung mit dem Endgerät (300) auf der Grundlage von Information bezüglich darauf geprüft wurde, ob die Verbindungsanforderung vom Endgerät (300) akzeptiert wird, dessen Verbindung angefordert wurde, die in der Verbindungsantwort inbegriffen ist;
wobei Kommunikation zwischen dem Verbindung anfordernden Endgerät (100), dem Gruppeneigentümer-Endgerät (200) und dem Endgerät (300) dessen Verbindung angefordert wurde, unter Verwendung von Wi-Fi hergestellt wird; und
wobei die Verbindungsantwort eine Information zur Ausführung der Bereitstellung einschließt, wenn das Endgerät (300), dessen Verbindung angefordert wurde, die Verbindungsanforderung akzeptiert.

4. Verfahren nach Anspruch 3, wobei die Verbindungsanforderung eine Gerätekennung des Endgeräts (300) umfasst, dessen Verbindung angefordert wurde.

5. Verfahren nach Anspruch 3, wobei die Anforderung des Verbindungsrelais wenigstens eins von Folgenden umfasst: ein Anbieter-Namensfeld, ein Feld der Dienstart und ein Datenfeld.

6. Verfahren zur Herstellung einer Verbindung zwischen Endgeräten (100, 300), umfassend:
Empfangen (S510), durch das Endgerät (300), dessen Verbindung angefordert wurde, einer Anforderung des Verbindungsrelais, die einer Anforderung für Kommunikation Peer-to-Peer, P2P, entspricht, die von einem Verbindung anfordernden Endgerät (100) gesendet wurde, die ab einem Gruppeneigentümer-Endgerät (200) weitergeleitet wird;
Ermitteln (S540), durch das Endgerät (300), dessen Verbindung angefordert wurde, ob die Verbindungsanforderung des Verbindung anfordernden Endgeräts (100) akzeptiert werden soll; und
Senden (S560), durch das Endgerät (300), dessen Verbindung angefordert wurde, an das Gruppeneigentümer-Endgerät (200), einer Antwort des Verbindungsrelais, die auf dem Ermittlungsergebnis beruhend vom Endgerät (300) generiert wurde, dessen Verbindung angefordert wurde;
wobei Kommunikation zwischen dem Verbindung anfordernden Endgerät (100), dem Gruppeneigentümer-Endgerät (200) und dem Endgerät (300), dessen Verbindung angefordert wurde, unter Verwendung von Wi-Fi hergestellt und
wobei die Antwort des Verbindungsrelais zur Generierung (S480) einer Verbindungsantwort zu verwenden ist, auf welcher ein Passwort zur Verwendung in einem Bereitstellungsprozess (S390) zwischen dem Verbindung anfordernden Endgerät (100) und dem Gruppeneigentümer-Endgerät (200) beruht; und
wobei die Verbindungsantwort eine Information zur Ausführung der Bereitstellung einschließt, wenn das Endgerät (300), dessen Verbindung angefordert wurde, die Verbindungsanforderung akzeptiert.

7. Verfahren nach Anspruch 6, wobei das Ermitteln (S540) durch das Endgerät (300), dessen Verbindung angefordert wurde, ob die Verbindungsanforderung für P2P-Kommunikation akzeptiert werden soll, umfasst:
Anzeigen (S520) einer Benachrichtigung, die anzeigt, ob die Verbindungsanforderung für P2P-Kommunikation ab dem Verbindung anfordernden Endgerät (100) empfangen wird;
Empfangen (S530) eines Nutzer-Auswahlbefehls, der anzeigt, ob die Verbindungsanforderung des Verbindung anfordernden Endgeräts (100) akzeptiert wird; und
Ermitteln (S540) auf dem Nutzer-Auswahlbefehl beruhend, ob die Verbindungsanforderung akzeptiert wird.

8. Verfahren nach Anspruch 6, wobei die Antwort des Verbindungsrelais wenigstens eins von Folgenden umfasst: ein Anbieter-Namensfeld, ein Feld der Dienstart und ein Datenfeld.

9. Verfahren nach Anspruch 8, wobei das Feld der Dienstart auf einen Wert eingestellt ist, der einer Antwort des Relais zur Entdeckung der Bereitstellung entspricht; und
wobei das Datenfeld Folgendes umfasst, wenn die Verbindungsanforderung akzeptiert wird: wenigstens eine einer Tastenkonfiguration (PBC) Information oder eines PIN-Code, auf einem "Wi-Fi Simple" Konfiguration- (WSC)-Konfigurationsverfahren beruhend.

10. Endgerät (100), umfassend:
Eine Kommunikationseinheit (110), die für Datenkommunikation über Wi-Fi konfiguriert ist; und
eine Steuerungseinheit (120), die konfiguriert ist, die Kommunikationseinheit (110) zu steuern, zum:
Senden (S330) einer Verbindungsanforderung für Kommunikation Peer-to-Peer bzw. P2P mit einem Endgerät (300), dessen Verbindung angefordert wurde, die über Wi-Fi ab einem Gruppeneigentümer-Endgerät (200) an das Endgerät (300) weitergeleitet wurde, dessen Verbindung angefordert wurde, wobei die genannte Verbindungsanforderung eine Gerätekennung des Endgeräts (300) einschließt, dessen Verbindung angefordert wurde und
Empfangen (S340) einer Verbindungsantwort ab dem Gruppeneigentümer-Endgerät (200), die anzeigt, ob die Verbindungsanforderung für P2P-Kommunikation vom Endgerät (300), dessen Verbindung angefordert wurde, akzeptiert wird;
wobei die Steuerungseinheit (120) ferner für Folgendes konfiguriert ist:
Ausführen (S390), mit dem Gruppeneigentümer-Endgerät (200), eines Bereitstellungsprozesses zum Verbinden des Endgeräts (100) mit dem Gruppeneigentümer-Endgerät (200) unter Verwendung eines Passworts, das zur Herstellung der Verbindung mit dem Endgerät (300), dessen Verbindung angefordert wurde, auf Information beruhend hinsichtlich darauf geprüft wurde, ob die Verbindungsanforderung vom Endgerät (300) akzeptiert wird, dessen Verbindung angefordert wurde, die in der Verbindungsantwort inbegriffen ist; und
wobei die Verbindungsantwort eine Information zur Ausführung der Bereitstellung einschließt, wenn das Endgerät (300), dessen Verbindung angefordert wurde, die Verbindungsanforderung akzeptiert.

11. Endgerät (200), umfassend:
Eine Kommunikationseinheit (210), die für Datenkommunikation über Wi-Fi konfiguriert ist; und
eine Steuerungseinheit (220), die konfiguriert ist, die Kommunikationseinheit (210) zu steuern, zum:
Empfangen (S410) einer Verbindungsanforderung für Peer-to-Peer bzw. P2P-Kommunikation, die von einem Verbindung anfordernden Endgerät (100) gesendet wurde;
Senden (S450), an das Endgerät, dessen Verbindung angefordert wurde, einer Anforderung des Verbindungsrelais, die der Verbindungsanforderung entspricht;
Empfangen (S460) einer Antwort des Verbindungsrelais, die anzeigt, ob die Verbindungsanforderung für P2P mit dem Verbindung anfordernden Endgerät (100) vom Endgerät (300) akzeptiert wird, dessen Verbindung angefordert wurde; und
Senden (S480) einer Verbindungsantwort an das Verbindung anfordernde Endgerät (100);
wobei die Steuerungseinheit (220) ferner für Folgendes konfiguriert ist:
Ausführen, mit dem Verbindung anfordernden Endgerät (100), eines Bereitstellungsprozesses, um das Endgerät (200) mit dem Verbindung anfordernden Endgerät (100) unter Verwendung eines Passworts zu verbinden, das zur Herstellung der Verbindung mit dem Endgerät (300), dessen Verbindung angefordert wurde, auf Information beruhend hinsichtlich darauf geprüft wurde, ob die Verbindungsanforderung vom Endgerät (300), dessen Verbindung angefordert wurde, akzeptiert wird, die in der Verbindungsantwort inbegriffen ist; und
wobei die Verbindungsantwort eine Information zur Ausführung der Bereitstellung einschließt, wenn das Endgerät (300), dessen Verbindung angefordert wurde, die Verbindungsanforderung akzeptiert.

12. Endgerät (200) nach Anspruch 11, wobei die Verbindungsanforderung eine Gerätekennung des Endgeräts (300) umfasst, dessen Verbindung angefordert wurde.

13. Endgerät (200) nach Anspruch 11, wobei die Anforderung des Verbindungsrelais wenigstens eins von Folgenden umfasst: ein Anbieter-Namensfeld, ein Feld der Dienstart und ein Datenfeld.

14. Endgerät (300), umfassend:
Eine Kommunikationseinheit (310), die Datenkommunikation über Wi-Fi ausführt; und
eine Steuerungseinheit (320) für Folgendes konfiguriert ist:
Steuern der Kommunikationseinheit (310) zum Empfangen (S510) einer Anforderung des Verbindungsrelais, die auf einer Verbindungsanforderung für Peer-to-Peer bzw. P2P-Kommunikation beruhend generiert wurde, die von einem Verbindung anfordernden Endgerät (100) gesendet und ab einem Gruppeneigentümer-Endgerät (200) weitergeleitet wurde;
Ermitteln, ob die Verbindungsanforderung des Verbindung anfordernden Endgeräts (100) akzeptiert werden soll; und
Steuern der Kommunikationseinheit (310) eine Antwortnachricht des Verbindungsrelais, die auf dem Ermittlungsergebnis beruht, an das Gruppeneigentümer-Endgerät (200) zu senden (S560);
wobei die Antwort des Verbindungsrelais zur Verwendung beim Generieren einer Verbindungsantwort bestimmt ist, auf der ein Passwort zur Verwendung in einem Bereitstellungsprozess beruht, der zwischen dem Verbindung anfordernden Endgerät (100) und dem Gruppeneigentümer-Endgerät (200) ausgeführt wird; und
wobei die Verbindungsantwort eine Information zur Ausführung der Bereitstellung einschließt, wenn das Endgerät (300), dessen Verbindung angefordert wurde, die Verbindungsanforderung akzeptiert.

15. Endgerät (300) nach Anspruch 14, wobei die Antwort des Verbindungsrelais wenigstens eins des Folgenden umfasst: ein Anbieter-Namensfeld, ein Feld der Dienstart und ein Datenfeld.

## Revendications

1. Procédé d'établissement d'une connexion entre terminaux (100, 300), comprenant :
la transmission (S330), par un terminal demandeur de connexion (100) à un terminal propriétaire de groupe (200), d'une demande de connexion pour une communication entre homologues, P2P (Peer-to-Peer), avec un terminal à connexion demandée (300) comportant un identifiant de dispositif d'un terminal à connexion demandée (300) ;
la réception (S340), par le terminal demandeur de connexion (100), d'une réponse de connexion par le terminal propriétaire de groupe (200) comportant des informations indiquant que le terminal à connexion demandée (300) accepte ou non la demande de connexion pour une communication P2P ; et
l'exécution (S390), par le terminal demandeur de connexion (100) avec le terminal propriétaire de groupe (200), d'un processus d'approvisionnement pour connecter le terminal demandeur de connexion (100) au terminal propriétaire de groupe (200) en utilisant une référence vérifiée pour établir la connexion avec le terminal à connexion demandée (300) en fonction des informations indiquant que la demande de connexion est acceptée ou non par le terminal à connexion demandée (300) qui sont incluses dans la réponse de connexion ;
dans lequel la demande de connexion est relayée par le terminal propriétaire de groupe (200) au terminal à connexion demandée (300) et la réponse de connexion est relayée par le terminal propriétaire de groupe (200) au terminal demandeur de connexion (100) ;
dans lequel la communication entre le terminal demandeur de connexion (100), le terminal propriétaire de groupe (200) et le terminal à connexion demandée (300) est réalisée en mode WiFi ; et
dans lequel la réponse de connexion comporte une information pour exécuter l'approvisionnement si le terminal à connexion demandée (300) accepte la demande de connexion.

2. Procédé selon la revendication 1, dans lequel l'identifiant de dispositif est utilisé pour adresser la demande de connexion au terminal à connexion demandée (300) ; et
dans lequel le terminal à connexion demandée (300) détermine qu'il convient ou non d'accepter la demande de connexion.

3. Procédé d'établissement d'une connexion entre terminaux (100, 300), comprenant :
la transmission (S450), par un terminal propriétaire de groupe (200), d'une demande de relais de connexion correspondant à une demande de connexion transmise par un terminal demandeur de connexion (100) recherchant une communication entre homologues, P2P (Peer-to-Peer), avec un terminal à connexion demandée (300) ;
la réception (S460), par le terminal propriétaire de groupe (200), d'une réponse de relais de connexion indiquant que la demande de connexion est acceptée par le terminal à connexion demandée (300) ;
la transmission (S480), par le terminal propriétaire de groupe (200), d'une réponse de connexion au terminal demandeur de connexion (100) quand la demande de connexion est acceptée par le terminal à connexion demandée (300) ; et
l'exécution, par le terminal propriétaire de groupe (200) avec le terminal demandeur de connexion (100), d'un processus d'approvisionnement pour connecter le terminal propriétaire de groupe (200) au terminal demandeur de connexion (100) en utilisant une référence vérifiée pour établir la connexion avec le terminal à connexion demandée (300) en fonction des informations indiquant que la demande de connexion est acceptée ou non par le terminal à connexion demandée (300) qui sont incluses dans la réponse de connexion ;
dans lequel la communication entre le terminal demandeur de connexion (100), le terminal propriétaire de groupe (200) et le terminal à connexion demandée (300) est réalisée en mode WiFi ; et
dans lequel la réponse de connexion comporte une information pour exécuter l'approvisionnement si le terminal à connexion demandée (300) accepte la demande de connexion.

4. Procédé selon la revendication 3, dans lequel la demande de connexion comprend un identifiant de dispositif du terminal à connexion demandée (300).

5. Procédé selon la revendication 3, dans lequel la demande de relais de connexion comprend au moins l'un d'un champ de nom de fournisseur, d'un champ de type de service et d'un champ de données.

6. Procédé d'établissement d'une connexion entre terminaux (100, 300), comprenant :
la réception (S510), par le terminal à connexion demandée (300), d'une demande de relais de connexion correspondant à une demande de connexion pour une communication entre homologues, P2P (Peer-to-Peer) transmise par un terminal demandeur de connexion (100) qui est relayée par un terminal propriétaire de groupe (200) ;
la détermination (S540), par le terminal à connexion demandée (300), qu'il convient ou non d'accepter la demande de connexion du terminal demandeur de connexion (100) ; et
la transmission (S560), par le terminal à connexion demandée (300) au terminal propriétaire de groupe (200), d'une réponse de relais de connexion générée en fonction d'un résultat de détermination par le terminal à connexion demandée (300) ;
dans lequel la communication entre le terminal demandeur de connexion (100), le terminal propriétaire de groupe (200) et le terminal à connexion demandée (300) est réalisée en mode WiFi ; et
dans lequel la réponse de relais de connexion est destinée à être utilisée dans la génération (S480) d'une réponse de connexion sur laquelle est basée une référence destinée à être utilisée dans un processus d'approvisionnement exécuté (S390) entre le terminal demandeur de connexion (100) et le terminal propriétaire de groupe (200) ; et
dans lequel la réponse de connexion comporte une information pour exécuter l'approvisionnement si le terminal à connexion demandée (300) accepte la demande de connexion.

7. Procédé selon la revendication 6, dans lequel la détermination (S540) par le terminal à connexion demandée (300) qu'il convient ou non d'accepter la demande de connexion pour une communication P2P comprend :
l'affichage (S520) d'une notification indiquant que la demande de connexion pour une communication P2P est reçue depuis le terminal demandeur de connexion (100);
la réception (S530) d'une commande de sélection d'utilisateur qui indique que la demande de connexion du terminal demandeur de connexion (100) est acceptée ou non ; et
la détermination (S540) en fonction de la commande de sélection d'utilisateur que la demande de connexion est acceptée ou non.

8. Procédé selon la revendication 6, dans lequel la réponse de relais de connexion comprend au moins l'un d'un champ de nom de fournisseur, d'un champ de type de service et d'un champ de données.

9. Procédé selon la revendication 8, dans lequel le champ de type de service est réglé à une valeur correspondant à une réponse de relais de découverte d'approvisionnement ; et
dans lequel le champ de données comprend, quand la demande de connexion est acceptée, au moins l'un d'une information de configuration de bouton poussoir (PBC) ou d'un code PIN basé sur un procédé de simple configuration Wi-Fi (W8C).

10. Terminal (100) comprenant :
une unité de communication (110) configurée pour la communication de données en mode WiFi ; et
une unité de commande (120) configurée pour commander l'unité de communication (110) afin de :
transmettre (S330) une demande de connexion pour une communication entre homologues, P2P (Peer-to-Peer), avec un terminal à connexion demandée (300) qui est relayée en mode WiFi par un terminal propriétaire de groupe (200) au terminal à connexion demandée (300), ladite demande de connexion comportant un identifiant de dispositif du terminal à connexion demandée (300) et
recevoir (S340) une réponse de connexion par le terminal propriétaire de groupe (200) indiquant que la demande de connexion pour une communication P2P est acceptée ou non par le terminal à connexion demandée (300) ;
dans lequel l'unité de commande (120) est configurée en outre pour :
exécuter (S390), avec le terminal propriétaire de groupe (200), un processus d'approvisionnement pour connecter le terminal (100) au terminal propriétaire de groupe (200) en utilisant une référence vérifiée pour établir la connexion avec le terminal à connexion demandée (300) en fonction des informations indiquant que la demande de connexion est acceptée ou non par le terminal à connexion demandée (300) qui sont incluses dans la réponse de connexion ; et
dans lequel la réponse de connexion comporte une information pour exécuter l'approvisionnement si le terminal à connexion demandée (300) accepte la demande de connexion.

11. Terminal (200) comprenant :
une unité de communication (210) configurée pour la communication de données en mode WiFi ; et
une unité de commande (220) configurée pour commander l'unité de communication (210) afin de :
recevoir (S410) une demande de connexion pour une communication entre homologues, P2P (Peer-to-Peer), transmise par un terminal demandeur de connexion (100) ;
transmettre (S450), au terminal à connexion demandée, une demande de relais de connexion correspondant à la demande de connexion ;
recevoir (S460) une réponse de relais de connexion indiquant que la demande de connexion pour une communication P2P avec le terminal demandeur de connexion (100) est acceptée ou non par le terminal à connexion demandée (300) ; et
transmettre (S480) une réponse de connexion au terminal demandeur de connexion (100) ;
dans lequel l'unité de commande (220) est configurée en outre pour :
exécuter, avec le terminal demandeur de connexion (100), un processus d'approvisionnement pour connecter le terminal (200) au terminal demandeur de connexion (100) en utilisant une référence vérifiée pour établir la connexion avec le terminal à connexion demandée (300) en fonction des informations indiquant que la demande de connexion est acceptée ou non par le terminal à connexion demandée (300) qui sont incluses dans la réponse de connexion ; et
dans lequel la réponse de connexion comporte une information pour exécuter l'approvisionnement si le terminal à connexion demandée (300) accepte la demande de connexion.

12. Terminal (200) selon la revendication 11, dans lequel la demande de connexion comprend un identifiant de dispositif du terminal à connexion demandée (300).

13. Terminal (200) selon la revendication 11, dans lequel la requête de relais de connexion comprend au moins l'un d'un champ de nom de fournisseur, d'un champ de type de service, et d'un champ de données.

14. Terminal (300) comprenant :
une unité de communication (310) qui effectue une communication de données en mode WiFi ;
et une unité de commande (320) configurée pour :
commander l'unité de communication (310) afin de recevoir (S510) une demande de relais de connexion générée en fonction d'une demande de connexion pour une communication entre homologues P2P (Peer-to-Peer) transmise par un terminal demandeur de connexion (100) et relayée par un terminal propriétaire de groupe (200) ;
déterminer qu'il convient ou non d'accepter la demande de connexion du terminal demandeur de connexion (100) ; et
commander l'unité de communication (310) afin de transmettre (S560) une réponse de relais de connexion générée en fonction d'un résultat de détermination au terminal propriétaire de groupe (200) ;
dans lequel la réponse de relais de connexion est destinée à être utilisée dans la génération d'une réponse de connexion qui est basée sur une référence destinée à être utilisée dans un processus d'approvisionnement exécuté entre le terminal demandeur de connexion (100) et le terminal propriétaire de groupe (200) ; et
dans lequel la réponse de connexion comporte une information pour exécuter l'approvisionnement si le terminal à connexion demandée (300) accepte la demande de connexion.

15. Terminal (300) selon la revendication 14, dans lequel la réponse de relais de connexion comprend au moins l'un d'un champ de nom de fournisseur, d'un champ de type de service, et d'un champ de données.
